# EUROPEAN PATENT APPLICATION

(11) **EP 4 804 701 A1**
(43) Date of publication of application: **09.09.2026**
(21) Application number: 24885031.5
(22) Date of filing: 04.11.2024
(51) Int. Cl.: H04W 74/00

(54) **COMMUNICATION METHOD, APPARATUS, DEVICE AND SYSTEM IN WIRELESS LOCAL AREA NETWORK**

(30) Priority: 03.11.2023 CN 202311457656; 08.11.2023 CN 202311479127; 22.11.2023 CN 202311572418
(71) Applicant: Ruijie Networks Co., Ltd., Fuzhou, Fujian 350002 (CN)
(72) Inventor: HONG, Danyang, Fuzhou, Fujian 350002 (CN); WANG, Haoyu, Fuzhou, Fujian 350002 (CN); ZHANG, Jian, Fuzhou, Fujian 350002 (CN)
(74) Representative: Prinz & Partner mbB
(86) International application number: PCT/CN2024/129756
(87) International publication number: WO 2025/093036

(57) **Abstract**

A communication method, an apparatus, a device, and a system in a wireless local area network are provided. The method includes: receiving, an ultra high reliability UHR access point multi-link logical entity, a second frame from a non-access point multi-link logical entity, where the second frame is configured to indicate a roaming request; and sending, by the UHR access point multi-link logical entity, a first frame to the non-access point multi-link logical entity, where the first frame is configured to indicate roaming reconfiguration. The UHR access point multi-link logical entity includes a first access point multi-link logical entity and a second access point multi-link logical entity, and the second access point multi-link logical entity is associated with the non-access point multi-link logical entity.

## Description

### CROSS-REFERENCE TO RELATED APPLICATIONS

The present application claims priority to the Chinese Patent Application No. 202311457656.1, filed with the China National Intellectual Property Administration on November 3, 2023 and entitled "COMMUNICATION METHOD, APPARATUS, DEVICE, AND SYSTEM IN WIRELESS LOCAL AREA NETWORK", the Chinese Patent Application No. 202311479127.1, filed with the China National Intellectual Property Administration on November 8, 2023 and entitled "COMMUNICATION METHOD, APPARATUS, DEVICE, AND SYSTEM IN WIRELESS LOCAL AREA NETWORK", and the Chinese Patent Application No. 202311572418.5, filed with the China National Intellectual Property Administration on November 22, 2023 and entitled "COMMUNICATION METHOD, APPARATUS, DEVICE, AND SYSTEM IN WIRELESS LOCAL AREA NETWORK", which are incorporated herein by reference in their entireties.

### TECHNICAL FIELD

The present application relates to the field of wireless communication technologies, and in particular, to a communication method, an apparatus, a device, and a system in a wireless local area network.

### BACKGROUND

In the related art, when a mobile device moves from a coverage area of one Access Point (Access Point, AP) to a coverage area of another AP, a handover of the connection between the mobile device and different APs is required. However, the handover process involves substantial signaling exchange, resulting in relatively long handover latency and possible interruption of data transmission. Therefore, how to achieve seamless roaming to ensure continuity of data transmission remains an urgent technical problem to be solved.

### SUMMARY

Embodiments of the present application provide a communication method, an apparatus, a device, and a system in a wireless local area network.

Embodiments of the present application provide a communication method in a wireless local area network, including:
receiving, by an ultra high reliability UHR access point multi-link logical entity, a second frame from a non-access point multi-link logical entity, where the second frame is configured to initiate a roaming request; and
sending, by the UHR access point multi-link logical entity, a first frame to the non-access point multi-link logical entity, where the first frame is configured to indicate roaming reconfiguration;
where the UHR access point multi-link logical entity includes a first access point multi-link logical entity and a second access point multi-link logical entity, and the second access point multi-link logical entity is associated with the non-access point multi-link logical entity.

Embodiments of the present application provide a communication method in a wireless local area network, including:
sending, by a non-access point multi-link logical entity, a second frame to an ultra high reliability UHR access point multi-link logical entity, where the second frame is configured to initiate a roaming request; and
receiving, by the non-access point multi-link logical entity, a first frame from the UHR access point multi-link logical entity, where the first frame is configured to indicate roaming reconfiguration;
where the UHR access point multi-link logical entity includes a first access point multi-link logical entity and a second access point multi-link logical entity, and the second access point multi-link logical entity is associated with the non-access point multi-link logical entity.

Exemplary embodiments of the present application provide a method for constructing a communication frame, the frame being applied to wireless network communication of an ultra high reliability (UHR) access point multi-link logical entity. The method includes generating a first indication field, the first indication field indicating that a non-access point multi-link logical entity is to switch to one or more links associated with a first access point multi-link logical entity, where the first access point multi-link logical entity is affiliated with the UHR access point multi-link logical entity.

In some embodiments, the first indication field is configured to indicate logical entity identifier information corresponding to the first access point multi-link logical entity and link information corresponding to the one or more links.

In some embodiments, the link information includes information about the number of links and information about one or more link identifiers.

In some embodiments, the first indication field further includes a STA control field.

In some embodiments, the STA control field includes a link deletion mode field and/or a link deletion count field.

In some embodiments, the method further includes generating an action field, where field content included in the first indication field depends on the value of the action field.

In some embodiments, the first indication further indicates a switching order of the one or more links.

Exemplary embodiments of the present application provide a method for constructing a communication frame, the frame being applied to wireless network communication of an ultra high reliability (UHR) access point multi-link logical entity. The method includes generating a UHR mobility domain element field, where the UHR mobility element field includes a seamless transition capability field.

In some embodiments, the seamless transition capability field has a byte length greater than 2 bits.

In some embodiments, the UHR mobility domain element field further includes a mobility domain identifier field.

In some embodiments, the UHR mobility domain field is set in a sixth frame.

In some embodiments, the UHR mobility domain field reuses an FT capability and policy (FT Capability and Policy) subfield in a mobility domain information element (Mobility Domain Information element, MDIE) field.

Embodiments of the present application provide an access point apparatus, including a sending module configured to send a first frame to a non-access point multi-link logical entity (Non-AP Multi-link logical entity), where the first frame includes first link identifier information, and the first link identifier information indicates a target link that is associated with a first access point multi-link logical entity and to which the non-access point multi-link logical entity is to switch.

Embodiments of the present application provide an access point apparatus, including:
a receiving module configured to receive a second frame from a non-access point multi-link logical entity, where the second frame is configured to initiate a roaming request; and
a sending module configured to send a first frame to the non-access point multi-link logical entity, where the first frame is configured to indicate roaming reconfiguration;
where the access point apparatus includes a first access point multi-link logical entity and a second access point multi-link logical entity, and the second access point multi-link logical entity is associated with the non-access point multi-link logical entity.

Embodiments of the present application provide a non-access point apparatus, including:
a sending module configured to send a second frame to an ultra high reliability UHR access point multi-link logical entity, where the second frame is configured to initiate a roaming request; and
a receiving module configured to receive a first frame from the UHR access point multi-link logical entity, where the first frame is configured to indicate roaming reconfiguration;
where the UHR access point multi-link logical entity includes a first access point multi-link logical entity and a second access point multi-link logical entity, and the second access point multi-link logical entity is associated with the non-access point apparatus.

Exemplary embodiments of the present application provide an access point multi-link device, including a processor and a transceiver; where the processor is configured to call a computer program and cooperate with the transceiver to implement the communication method according to the above embodiments.

Embodiments of the present application provide a non-access point multi-link device, including a processor and a transceiver; where the processor is configured to call a computer program, and cooperate with the transceiver to implement the communication method according to the above embodiments.

Embodiments of the present application provide a communication system in a wireless local area network, including the access point apparatus according to the above embodiments or the access point multi-link device according to the above embodiments, and the non-access point apparatus according to the above embodiments or the non-access point multi-link device according to the above embodiments.

Exemplary embodiments of the present application provide a computer-readable storage medium, on which instructions are stored, and when the instructions are executed by a processor, the processor executes the communication method in a wireless local area network according to the above embodiments.

Exemplary embodiments of the present application provide a computer program product, including computer program instructions, the computer program instructions causing a computer to execute the communication method in a wireless local area network according to the above embodiments.

### BRIEF DESCRIPTION OF DRAWINGS

To describe the technical solutions of the present application more clearly, the following briefly describes the accompanying drawings required for describing the embodiments of the present application. Apparently, the accompanying drawings in the following description show merely some embodiments of the present application, and a person of ordinary skill in the art may still derive other drawings of the embodiments from the accompanying drawings without creative efforts.
FIG. 1 shows an application environment network architecture diagram of a communication method in a wireless local area network according to embodiments of the present application.
FIG. 2 shows a schematic diagram of an application scenario of a communication method in a wireless local area network according to embodiments of the present application.
FIG. 3 shows a schematic structural diagram of a mobility domain element field according to embodiments of the present application.
FIG. 4 shows a schematic structural diagram of a seamless transition capability field of a mobility domain element field according to embodiments of the present application.
FIG. 5 shows a schematic diagram of frame structure extension of a mobility domain element field according to embodiments of the present application.
FIG. 6 shows a schematic structural diagram of a basic service set (Basic Service Set, BSS) transition management (BSS Transition Management, BTM) roaming frame (Roaming frame) according to embodiments of the present application.
FIG. 7 shows a schematic diagram of correspondence between values of an action (Action) subfield of a BTM roaming frame and functions thereof according to embodiments of the present application.
FIG. 8 shows a schematic structural diagram of a common information (CommonInfo) subfield of a BTM roaming frame according to embodiments of the present application.
FIG. 9 shows a schematic flowchart of an access procedure (Access Procedure) of a communication method according to embodiments of the present application.
FIG. 10 shows a schematic flowchart of an access procedure of a communication method according to embodiments of the present application.
FIG. 11 shows a schematic structural diagram of a KDE field in key information of a multicast key in a communication method according to embodiments of the present application.
FIG. 12 shows a schematic structural diagram of an FTE field of a fast transition (Fast Transition) protocol in key information of a multicast key in a communication method according to embodiments of the present application.
FIG. 13 shows a schematic diagram of a communication method in a wireless local area network according to embodiments of the present application.
FIG. 14 shows a schematic diagram of another communication method in a wireless local area network according to embodiments of the present application.
FIG. 15 shows a partial flowchart of a seamless roaming procedure in a communication method according to embodiments of the present application.
FIG. 16 shows a schematic flowchart of a remaining portion of the seamless roaming procedure in the communication method shown in FIG. 15.
FIG. 17 shows a schematic flowchart of a seamless roaming procedure of a communication method according to another embodiment of the present application.
FIG. 18 shows a schematic flowchart of a seamless roaming procedure of a communication method according to yet another embodiment of the present application.
FIG. 19 shows a format of a BTM request frame and a structure of a neighbor report element (Neighbor Report element) in a BSS transition candidate entry field thereof in a seamless roaming procedure according to yet another embodiment of the present application.
FIG. 20 shows a format of a BSS transition candidate preference subelement of a BSS transition candidate entry field according to yet another embodiment of the present application.
FIG. 21 shows a structure of a basic multi-link element (Basic Multi-Link Element) of a BSS transition candidate entry field according to yet another embodiment of the present application.
FIG. 22 shows a schematic flowchart of a seamless roaming procedure of a communication method according to yet another embodiment of the present application.
FIG. 23 shows a format of an ST capability field of a UHR mobility domain element in an access procedure according to yet another embodiment of the present application.
FIG. 24 shows values of a seamless BSS transition mode (Seamless BSS Transition Mode) of an ST capability field and corresponding meanings thereof according to yet another embodiment of the present application.
FIG. 25 shows an internal structural schematic diagram of an access point apparatus according to embodiments of the present application.
FIG. 26 shows an internal structural schematic diagram of a non-access point apparatus according to embodiments of the present application.
FIG. 27 shows a block diagram of an access point multi-link device according to embodiments of the present application.
FIG. 28 shows a block diagram of a non-access point multi-link device according to embodiments of the present application.

### DESCRIPTION OF EMBODIMENTS

Although the present application allows for multiple forms of embodiments, in the accompanying drawings to be specifically described herein, embodiments of the present application including preferred embodiments are shown. It should be understood that the content disclosed herein is to be regarded as an explanation of the principles of the present application, and is not intended to limit the broad aspects of the present application to the one or more embodiments shown or disclosed.

To make the objectives, technical solutions, and advantages of the present application clearer, the following clearly and thoroughly describes the technical solutions in the embodiments of the present application with reference to the accompanying drawings in the embodiments of the present application. Apparently, the described embodiments are some but not all of the embodiments of the present application. Based on the embodiments of the present application, all other embodiments obtained by those skilled in the art without creative effort fall within the protection scope of the present application. Where no conflict exists, the embodiments of the present application and features in the embodiments can be arbitrarily combined with each other, and technical solutions formed by any combination still fall within the protection scope sought by the present application. Moreover, although a logical order is shown in the flowchart, in some cases, the steps shown or described may be performed in an order different from this order.

In the specification, claims, and accompanying drawings of the present application, the terms "first" and "second" are configured to distinguish between different objects, and not intended to describe a specific order. In addition, the term "include" and any variant thereof are intended to cover non-exclusive protection. For example, a process, method, system, product, or device that includes a series of steps or units is not limited to the listed steps or units, but optionally further includes unlisted steps or units, or optionally further includes other steps or units inherent to the process, method, system, product, or device.

In the case of using "include", "have", and "contain" described in the present application, another component may further be added unless explicit restrictive terms such as "only" or "consist of" are used. Unless mentioned to the contrary, a term in singular form may include plural form and cannot be understood as being limited to one in number.

Unless otherwise defined in the context, the term "logical entity" in the present application may refer to a functional module implemented by software, or may refer to a hardware unit with specific functions implemented by hardware, or may alternatively be implemented by a combination of a functional module of software and a hardware unit of hardware.

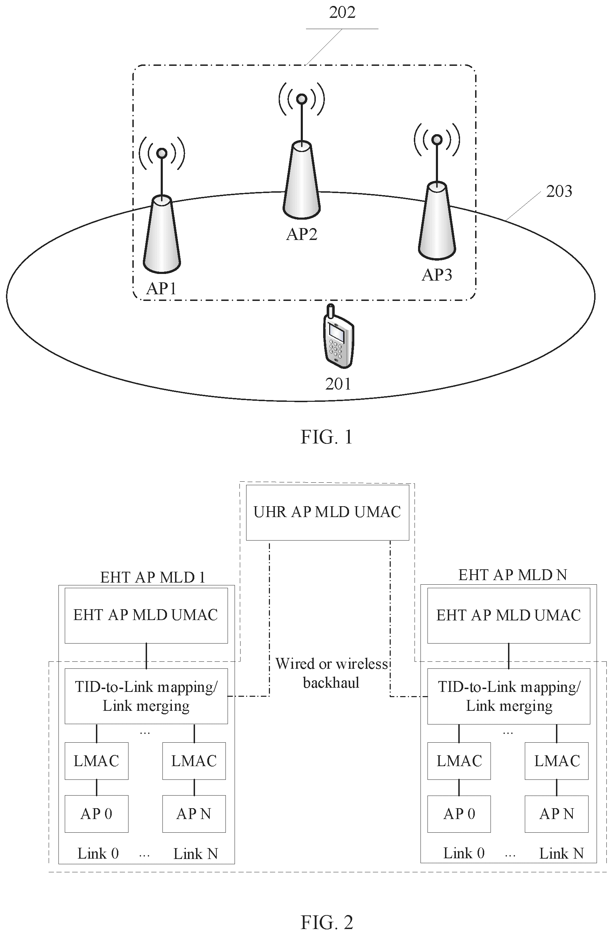

FIG. 1 is a schematic diagram of an application scenario to which embodiments of the present application are applicable. As shown in FIG. 1, the application scenario includes a station (STATION, STA) 201 and an access point (Access Point, AP) 202; where the AP 202 includes 3 APs. It should be noted that the number of APs involved in the AP 202 is not limited, and FIG. 1 is exemplified by only 3 APs. The APs shown in FIG. 1 may be multi-link access logical entities, such as non-co-located multi-link access logical entities, all of which are affiliated with an ultra high reliability (Ultra High Reliability, UHR) multi-link logical entity.

The AP 202 constitutes an AP wireless network environment 203 with 3 APs. When the STA 201 enters the AP wireless network environment 203, seamless roaming may be performed.

The station 201 may be an electronic device such as a mobile phone, a smart wearable device, a tablet computer, or a notebook. In addition, a related client may be installed on the station 201, and the client may be software, for example, an application (Application, APP), a browser, or short video software, or may be a web page, an applet, or the like.

To facilitate understanding of the embodiments of the present application, the related art of the present application is described.

An 802.11be network, also known as an extremely high throughput (Extremely High Throughput, EHT) network, achieves extremely high throughput through a range of system features and various mechanism enhancements. In an 802.11be network, wireless devices can support multi-link (Multi-link) communication. A wireless device supporting multi-link communication may mean that the wireless device supports communication on a plurality of frequency bands simultaneously, or communication on different channels of a same frequency band simultaneously. A wireless device supporting multi-link communication is generally referred to as a multi-link device (Multi-link Device, MLD). An MLD has one or more STAs.

Multi-link devices in a wireless local area network (Wireless Local Area Network, WLAN) are classified into two types: AP multi-link devices and non-access point (non-AP) multi-link devices. A STA in an AP MLD is referred to as an AP STA, and a STA in a non-AP MLD is referred to as a non-AP STA. For convenience, an AP STA is generally referred to as an AP, and a non-AP STA is generally referred to as a STA.

One or more links may be established between a non-access point multi-link device and an access point multi-link device, that is, associated links are formed. Each associated link connects one non-AP STA in the non-access point multi-link device and one AP in the access point multi-link device.

In an exemplary embodiment, the AP MLD is an EHT AP MLD, and the EHT AP MLD has a corresponding EHT upper media access control (Up Media Access Control, UMAC). When APs affiliated with an AP MLD are co-located with each other, the AP MLD is a collocated (collocated) AP MLD; otherwise, the AP MLD is a non-collocated (Non-collocated) AP MLD.

FIG. 2 shows an exemplary architecture diagram of an ultra high reliability (Ultra High Reliability, UHR) AP MLD. In this example, the UHR AP MLD includes N EHT AP MLDs and a UHR AP MLD UMAC that communicates independently with the N EHT AP MLDs through a wired or wireless backhaul network (backhaul). As shown in FIG. 2, EHT AP MLD 1 includes N APs (AP 0 to AP N in FIG. 2), and the N APs may be associated with a plurality of links respectively (as shown in the figure, link 0 to link N). The N APs are respectively in communication connection with N LMACs, and converge at a TID (Traffic Identifier)-to-Link mapping/Link merging (TID-to-Lin mapping/Link merging) module. The TID-to-Link mapping/Link merging module communicates with the UMAC of the UHR AP MLD via the backhaul (Backhaul). The UHR AP MLD UMAC controls and manages link communications of EHT AP MLD 1 to EHT AP MLD N.

In traditional Wi-Fi technology, conventional roaming functions are configured to achieve switching between connections of a mobile device (that is, STA) and different APs when moving from a coverage area of one AP to a coverage area of another AP, to ensure the Internet access performance of the mobile device. However, in conventional roaming, when a mobile device moves from the coverage area of one AP to that of another AP, the user needs to manually disconnect from the current connection, search for available Wi-Fi networks, and manually select a new AP for connection. This roaming method may cause connection interruption, degrading data transmission reliability and user experience.

Therefore, fast transition (Fast Transition, FT) roaming technology is introduced in traditional Wi-Fi technology. FT roaming technology is a fast Wi-Fi roaming technology, also referred to as 802.11r. It enables a four-way key handshake with the target AP to be embedded into a re-association process when a mobile device moves from the coverage area of one AP to another, thereby achieving the purpose of fast switching APs.

However, whether conventional roaming or FT roaming, the following problems exist during AP switching:
1. Relatively large frame overhead is incurred, and link authentication (Authentication) needs to be performed during AP switching of the mobile device, including 802.1X Extensible Authentication Protocol (Extensible Authentication Protocol, EAP) authentication and the four-way handshake of the roaming process, resulting in considerable delay; and
2. User data transmission may be interrupted during the roaming process of the mobile device, compromising data continuity, reducing transmission reliability, and deteriorating the user experience.

A communication method according to embodiments of the present application can achieve seamless roaming of a mobile device through a UHR multi-link logical entity, reduce switching delay during roaming, and ensure continuity of data transmission.

Exemplary embodiments of the present application provide a communication method applied to a UHR multi-link logical entity, achieving fast roaming while ensuring continuity of data transmission.

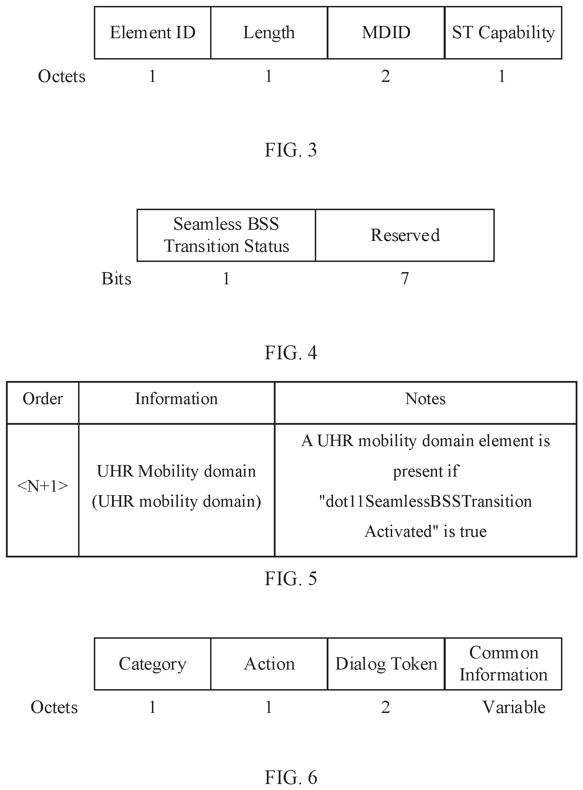

To this end, embodiments of the present application introduce seamless roaming frames and add fields to 802.11be frames. Below, with reference to FIG. 3 to FIG. 12, the introduced frames and fields are described.

It should be noted that the names of the frames, fields, or elements provided in embodiments of the present application are only exemplary, and may be replaced with other names. This is not limited in the present application.

FIG. 3 shows a schematic structural diagram of a UHR mobility domain element (Mobility Domain element) field according to embodiments of the present application.

The UHR mobility domain element field is configured to declare seamless transition capability (Seamless Transition Capability) or seamless roaming capability (Seamless Roaming Capability). For example, the UHR mobility domain element field includes a seamless transition capability (Seamless Transition Capability) field. The seamless transition capability field is configured to declare wireless roaming capability or wireless transition capability.

Optionally, the seamless transition capability field has a byte length of 1 octet or more, such as 2 octets or 3 octets.

Optionally, the UHR mobility domain element further includes at least one of an element identifier (Element ID), a length (Length), or a mobility domain identifier (Mobility Domain ID, MDID), where the MDID field is an identifier for naming a UHR roaming mobility domain.

The UHR mobility domain element field may be appended to a Beacon frame (Beacon Frame), a probe response frame (Probe Response Frame), an association request frame (Association Request Frame), an association response frame (Association Response Frame), and an authentication frame (Authentication Frame) from a UHR AP MLD (or an AP), to declare the seamless transition capability of the UHR AP MLD (for example, to a non-access point multi-link device). The extended structures of these frames will be further described below.

It can be understood that the UHR mobility domain element field may alternatively be appended to a frame from a non-AP STA MLD (or a non-AP STA). When the UHR mobility domain element field is appended to a frame from a non-AP STA MLD, the UHR mobility domain element field is configured to indicate the seamless transition capability of the non-AP STA MLD (or the non-AP STA).

In some embodiments, the UHR mobility domain element field may be appended as a new field to the above frames.

Alternatively, the UHR mobility domain element field may reuse or extend existing fields in the above frames. For example, the UHR mobility domain element field may extend and reuse the FT capability and policy (FT Capability and Policy) subfield in the mobility domain information element (Mobility Domain Information element, MDIE) field in the 802.11r protocol.

FIG. 4 shows a schematic structural diagram of a seamless transition capability (ST Capability) field of a UHR mobility domain element field according to embodiments of the present application. The seamless transition capability field is configured to declare the seamless transition capability of an AP or a non-AP STA capable of performing seamless basic service set (Basic Service Set, BSS) transition.

The seamless transition capability field may include a seamless basic service set transition status (Seamless BSS Transition Status) subfield. Optionally, 1 bit is configured to indicate the seamless basic service set transition status.

In some embodiments, when the MLD has seamless transition capability, the seamless basic service set transition status subfield may be set to 1; otherwise, set to 0. Alternatively, more bits may be configured to indicate the seamless basic service set transition status. This is not limited in the embodiments of the present application.

Optionally, the seamless transition capability field may further include a reserved (Reserved) field. The reserved field may have a length of 7 bits or other number of bits. This is not particularly limited in the embodiments of the present application.

FIG. 5 shows a schematic structural diagram of a frame structure extension field of a UHR mobility domain element field according to embodiments of the present application.

As described above, the UHR mobility domain element field may be appended to a Beacon frame (Beacon Frame), a probe response frame (Probe Response Frame), an association request frame (Association Request Frame), an association response frame (Association Response Frame), and an authentication frame (Authentication Frame) from a UHR AP MLD (or an AP), to declare the seamless transition capability of the UHR AP MLD (for example, to a non-access point multi-link device). In the embodiment shown in FIG. 5, when the value of the "dot11SeamlessBSSTransition Activated" field is true, the UHR mobility domain element field may be present at the end of the above frames, that is, the UHR mobility domain element field is added to a reserved field of each of these frames or appended to an end of each of these frames.

Alternatively, the UHR mobility domain element field may be added to other positions in the above frames. This is not particularly limited in the embodiments of the present application.

Alternatively, whether the UHR mobility domain element field is present may be determined according to fields other than the "dot11SeamlessBSSTransition Activated" field. This is not particularly limited in the embodiments of the present application.

FIG. 6 shows a schematic structural diagram of a BSS transition management (BSS Transition Management, BTM) roaming frame (Roaming frame) according to embodiments of the present application.

To implement seamless roaming in a UHR AP MLD environment, a BTM roaming frame is introduced for roaming message exchange between a non-access point multi-link logical entity (for example, non-AP STA MLD) and a UHR AP MLD. The roaming messages include a roaming request (for example, sent from a non-AP STA MLD to a UHR AP MLD), a roaming link switching indication (for example, sent from a UHR AP MLD to a non-AP STA MLD), and a roaming link switching confirmation (for example, sent from a non-AP STA MLD to a UHR AP MLD).

As shown in FIG. 6, the BTM roaming frame includes an action (Action) field. Optionally, the action field has a length of 1 octet or more, such as 2 octets, 5 octets, or 10 octets.

Optionally, as shown in FIG. 6, the BTM roaming frame may further include a category (Category) field.

The category (Category) field is already defined in the existing 802.11 standard. For example, when set to 10, it is associated with wireless network management (Wireless Network Management, WNM).

Optionally, as shown in FIG. 6, the BTM roaming frame may further include a dialog token (Dialog Token) field. The Dialog Token field is a non-zero value assigned by the STA sending the BTM roaming frame, to identify whether the frame type is a request frame type or a response frame type.

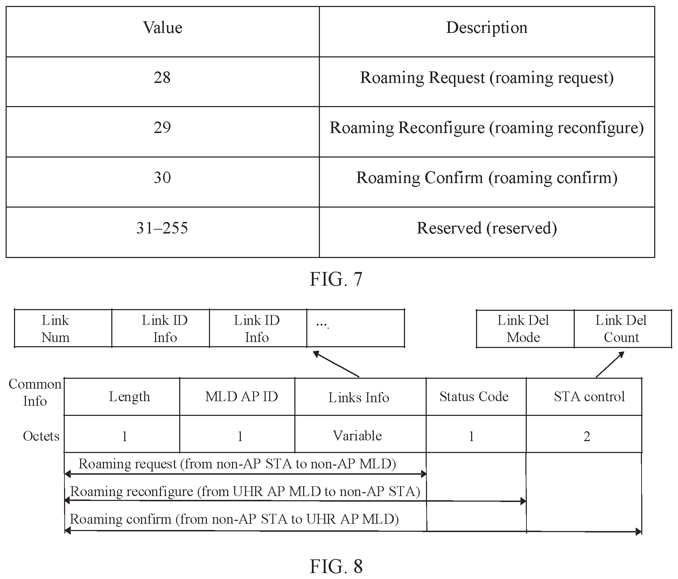

FIG. 7 shows a schematic diagram of correspondence between values of an action (Action) field of a BTM roaming frame and functions thereof according to embodiments of the present application. Different values of the action field correspond to different types of BTM roaming frames.

For example, when the action field value is 28, the BTM roaming frame is of a roaming request (Roaming Request) frame type. When the action field value is 29, the BTM roaming frame is of a roaming reconfigure (Roaming Reconfigure) frame type. When the action field value is 30, the BTM roaming frame is of a roaming confirm (Roaming Confirm) frame type.

As shown in FIG. 6, the BTM roaming frame further includes a common information field.

FIG. 8 shows a schematic structural diagram of a common information (Common Info) field of a BTM roaming frame according to embodiments of the present application. When the value in the action field differs, that is, when the type of the BTM roaming frame differs (and may also indicate that sending and receiving ends of the frame also differ), the roaming information carried in the corresponding common information field is also different.

The common information field of the BTM roaming frame includes at least an MLD AP identifier (MLD AP ID) field and a links information (Links Info) field.

Optionally, the common information field may further include a length field. The length field is configured to indicate a length of the fields in the common information field except the length field.

When the BTM roaming frame is a BTM roaming reconfigure frame, the common information field may further include a status code field. Optionally, the common information field may further include a STA control field.

When the BTM roaming frame is a BTM roaming confirm frame, the common information field may further include a status code field.

Optionally, in the embodiment shown in FIG. 8, the common information field of the BTM roaming frame may include a length (Length) field, an MLD AP identifier (MLD AP ID) field, a links information (Links Info) field, a status code (Status Code) field, and a STA control (STA Control) field.

The length field indicates a length of the fields in the common information field except the length field. The length field may have a length of 1 octet. In other embodiments, the length field may have a greater length, such as 2 octets, 5 octets, or 10 octets. This is not particularly limited in the present application.

The MLD AP ID field indicates an identifier of a requested AP MLD, that is, an identifier of an MLD AP to which switching is requested. The MLD AP identifier field has a length of 1 octet. In other embodiments, the length of the MLD AP identifier may have a greater length, such as 2 octets, 5 octets, or 10 octets. This is not particularly limited in the present application.

The links information field indicates link information of a target link, that is, link information of a target link that is expected to be disconnected from an original MLD AP and associated with a new MLD AP by the non-AP MLD. The length of the links information field is variable, depending on the number of target links indicated in the links information field. Accordingly, the length of the common information field is also variable.

Optionally, as shown in FIG. 8, the links information field may include a link number (Link Num) field and one or more link identifier information (Link ID Info) fields. The Link Num field indicates the number of links for which switching (or disconnection) is requested, or the number of target links. The Link ID Info field indicates a link identifier of a link for which switching is requested, or a link identifier of a target link.

The status code field is already defined in the existing 802.11 standard, and details are not repeated in the present application. The status code field may have a length of 1 octet. In other embodiments, the Status Code field may have a greater length, such as 2 octets, 5 octets, or 10 octets. This is not particularly limited in the present application.

Optionally, as shown in FIG. 8, the STA control field may include a link deletion mode (Link Del Mode) field. The link deletion mode field may have a length of 8 bits. In other embodiments, the length of the link deletion mode field may alternatively be other values, such as 4 bits, 12 bits, or 16 bits.

The link deletion mode field may indicate a link deletion manner, or a link disconnection manner, a link switching manner, such as immediate disconnection (or immediate deletion or immediate switching) or delayed disconnection (or delayed deletion or delayed switching).

For example, in a case where the link deletion mode field has a length of 1 bit, when the link deletion mode field is set to 0, the requested link may be disconnected (or deleted or switched) immediately. When the link deletion mode field is set to 1, the requested link may be disconnected (or deleted or switched) after waiting for a specified time period.

Alternatively, in a case where the link deletion field has a length of 2 bits, when the link deletion mode field is set to 0, association with the link can be disconnected immediately; and when the link deletion mode field is set to 1, 2, or 3, association with the link is disconnected after waiting for a corresponding first preset time, second preset time, or third preset time respectively.

Optionally, the STA control field may further include a link deletion count (Link Del Count) field for indicating a delay duration of delayed disconnection. The link deletion count field may indicate the number of specified time units (Time Unit, TU) to wait after reception of the corresponding frame prior to disconnection (or deletion or switching) of the requested link. The link deletion count field may also indicate other physical quantities for controlling a waiting time prior to disconnection (or deletion or switching) of the requested link. The link deletion count field may have a length of 8 bits. In other embodiments, the length of the link deletion count field may alternatively be other values, such as 4 bits, 12 bits, or 16 bits.

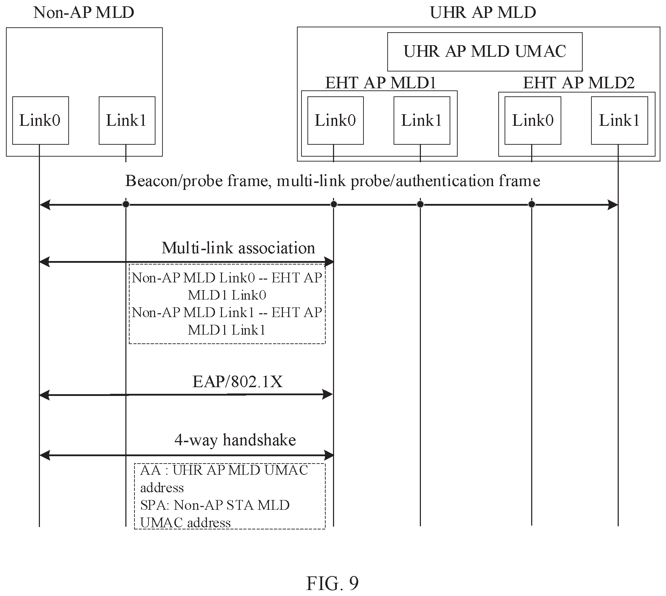

FIG. 9 shows a schematic diagram of an access procedure (Access Procedure) of a communication method according to embodiments of the present application.

As shown in FIG. 9, in the access procedure, after completion of probing, multi-link authentication, and association, a non-access point multi-link device (non-AP STA MLD) and/or an ultra high reliability access point multi-link device (UHR AP MLD) may compute and generate a unicast key (for example, a pairwise transient key (PTK)) through an EAPOL key frame (EAPOL-Key frame). The PTK may be computed based on the UMAC address of the UHR AP MLD and stored in the UMAC of the UHR AP MLD. Accordingly, the PTK can be shared with all AP MLDs affiliated with the UHR AP MLD, and for each AP MLD, the PTK is the same.

Specifically, the PTK may be generated in the generation stage of the access procedure and immediately shared with a plurality of AP MLDs of the UHR AP MLD. Alternatively, the PTK may be generated in the generation stage of the access procedure, stored in the UHR AP MLD UMAC, and then shared with the specified AP MLD under the control of the UHR AP MLD UMAC during the seamless roaming process.

In addition, a multicast key (for example, group temporal key (GTK), integrity group temporal key (IGTK), beacon integrity group temporal key (BIGTK)) may be computed based on the LMAC addresses of EHT AP MLDs corresponding to the links of the AP MLDs affiliated with the UHR AP MLD (that is, LMAC addresses corresponding to the UHR AP MLD, or LMAC addresses of corresponding EHT AP MLDs).

The UHR AP MLD sends or instructs to send the computed multicast keys to the corresponding non-AP STA MLDs, and the non-AP STA MLDs store these multicast keys. These multicast keys may be computed and sent by the UHR AP MLD UMAC, or computed by the EHT AP MLD UMAC to which the EHT AP MLD belongs, and directly sent by the EHT AP MLD to respective non-AP STA MLDs, or first transmitted back to the UHR AP MLD UMAC, and then sent by the UHR AP MLD UMAC to the respective non-AP STA MLDs.

For example, in the access stage of a non-AP STA MLD, the UHR AP MLD sends the computed multicast keys to that non-AP STA MLD in the access procedure.

Additionally or alternatively, before or during the seamless roaming process of a non-AP STA MLD, the UHR AP MLD sends or instructs to send the multicast keys to the non-AP STA MLD.

Optionally, in some embodiments, identifier information of the AP MLDs corresponding to the respective links may be added in the multicast key information to avoid confusion between same-frequency links of different AP MLDs in a non-collocated environment. Details will be specifically described in subsequent embodiments.

With this design of unicast keys and multicast keys, under the UHR AP MLD architecture, during the seamless roaming process of switching the non-AP STA MLD from MLD1 to MLD2, when the non-AP STA MLD is switched to a new AP MLD, there is no need to perform re-authentication (re-authentication), re-association (re-association), and a 4-way handshake (4-way handshake) again, which reduces the frame overhead in seamless roaming and the roaming authentication delay that would otherwise occur in FT roaming mechanism.

The operation manner of the unicast keys and multicast keys during the seamless roaming process will be described in the detailed description below.

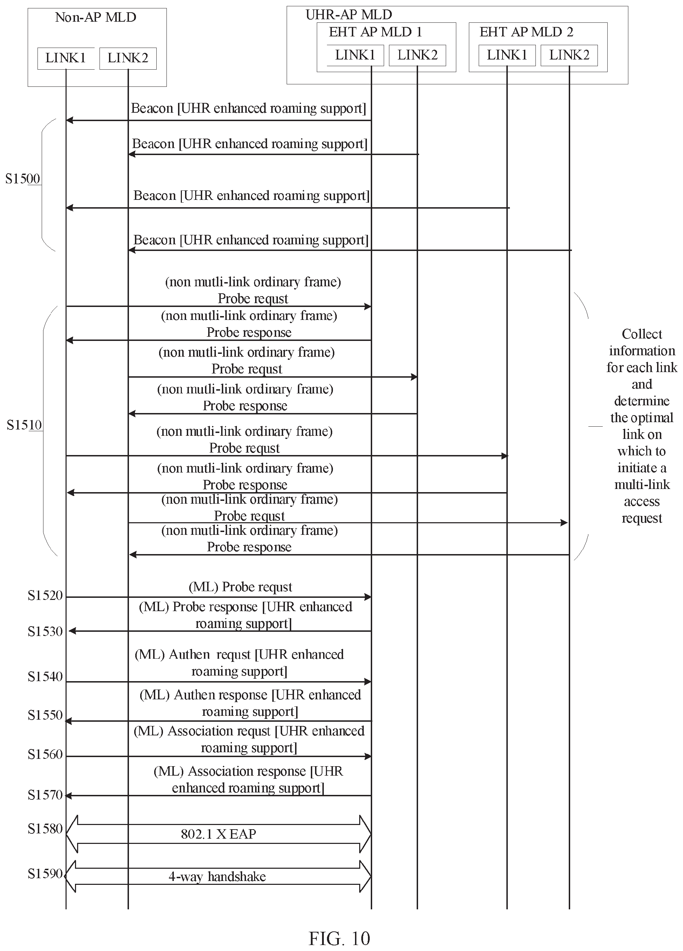

FIG. 10 shows a schematic flow diagram of an access procedure of a communication method according to another embodiment of the present application.

Step S1500: After power on, a non-AP STA first enters a passive scanning mode and listens for beacons on supported Links. Then the non-AP STA enters an active scanning mode and actively sends ordinary probe request frames on the links. Upon receiving an ordinary probe request frame, the UHR AP MLD controls the EHT AP MLD LMAC to feed back an ordinary probe response. For the ordinary probe frame, the transmitter address and receiver address are set to addresses bound to the Link to prevent misinterpretation by other Links on the same frequency. Therefore, the TA of the probe response frame is filled with a Link Mac Address of the EHT AP MLD LMAC, and the RA is filled with a Link Mac Address of the non-AP STA.

Step S1510: After completion of scanning, the non-AP STA selects an optimal Link based on all scanning results to initiate Multi-Link access.

Step S1520: The non-AP STA sends a Multi-Link Probe Request frame. Address 1 (Addr1) and address 3 (Addr3) in the Probe Request frame are filled with a Link Mac Address of an optimal EHT AP MLD selected after scanning, and information of other links is carried in the STA Control field in the Link Info.

Step S1530: The UHR AP MLD generates a Multi-Link Probe Response based on the received Multi-Link Probe Request, transmits the response through the receiving Link, and replies with relevant information on the corresponding Link.

Step S1540: The non-AP STA MLD initiates a Multi-Link Authen Request that carries information of other links requested for association.

Step S1550: The UHR AP MLD replies with a Multi-Link Authen Response on the received Link.

Step S1560: The non-AP STA MLD initiates a Multi-Link Assoc Request that carries information of other links.

Step S1570: The UHR AP MLD replies with a Multi-Link Assoc Response on the receiving Link, which indicates whether association is successful or failed on the Link requested by the corresponding non-AP STA.

Step S1580: The non-AP STA MLD and the UHR AP MLD perform 802.1X authentication on the receiving Link.

Step S1590: The non-AP STA MLD and the UHR AP MLD perform 4-way handshake key negotiation on the current Link, where the PTK is computed based on the UMAC address of the UHR AP MLD, the GTK, IGTK, and BIGTK are computed based on the EHT AP MLD Link Address, and the GTK, IGTK, and BIGTK corresponding to Links under all EHT AP MLDs affiliated with the same UHR AP MLD are sent to the non-AP STA MLD.

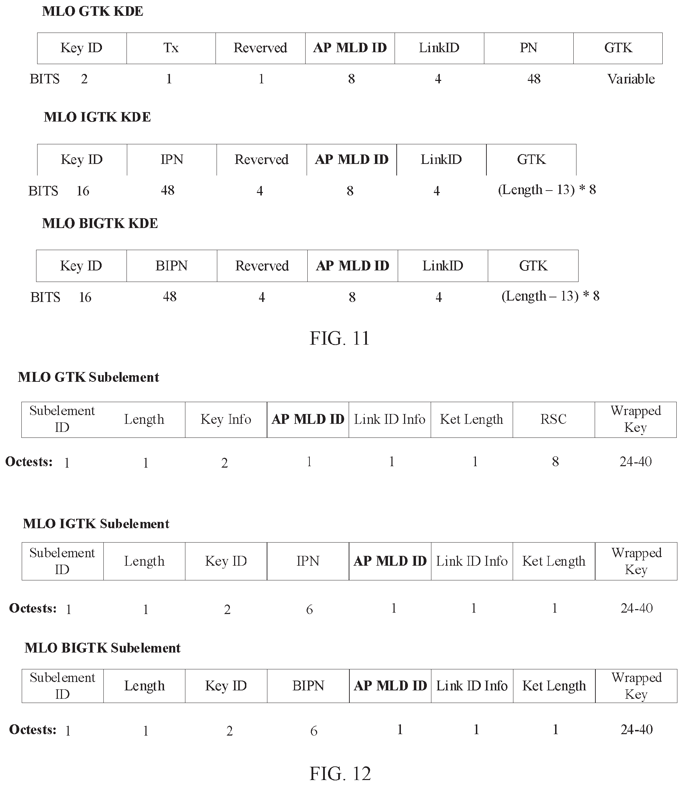

FIG. 11 shows a schematic structural diagram of a KDE field in key information of a multicast key in a communication method according to embodiments of the present application.

For each associated Link, different multicast keys are used for broadcast traffic in communications between the UHR AP MLD and the non-AP STA MLD, such as GTK, IGTK, and BIGTK. That is, the multicast keys are designed and computed at the link level. For example, the GTK, IGTK, and BIGTK are computed based on the LMAC address of each link on the AP side.

As shown in Fig. 11, the multicast keys are generated based on the LMAC address corresponding to each link on the AP side. To ensure execution of the 4-way handshake in the access procedure, in the embodiments, the EAPOL key KDEs (for example, GTK KDE, IGTK KDE, and BIGTK KDE) are extended with a new field, such as an APMLD identifier (AP MLD ID) field. The AP MLD ID field is configured to identify the AP MLD corresponding to a Link identifier (Link ID). Therefore, in a collocated UHR AP MLD architecture, the combination of the AP MLD ID field and the Link ID field can distinguish same-frequency links of different AP MLDs.

FIG. 12 shows a schematic structural diagram of an FTE field of an FT protocol in key information of a multicast key in a communication method according to embodiments of the present application.

Similarly, to ensure the execution of the 4-way handshake in the access procedure, the FTE field of the FT protocol is extended in a similar manner in the embodiments of the present application. For example, an AP MLD identifier field is added to the MLO GTK subelement, the MLO IGTK subelement, and the MLO BIGTK subelement. The combination of the AP MLD identifier field and the link identifier information (Link ID Info) field can distinguish same-frequency links of different AP MLDs.

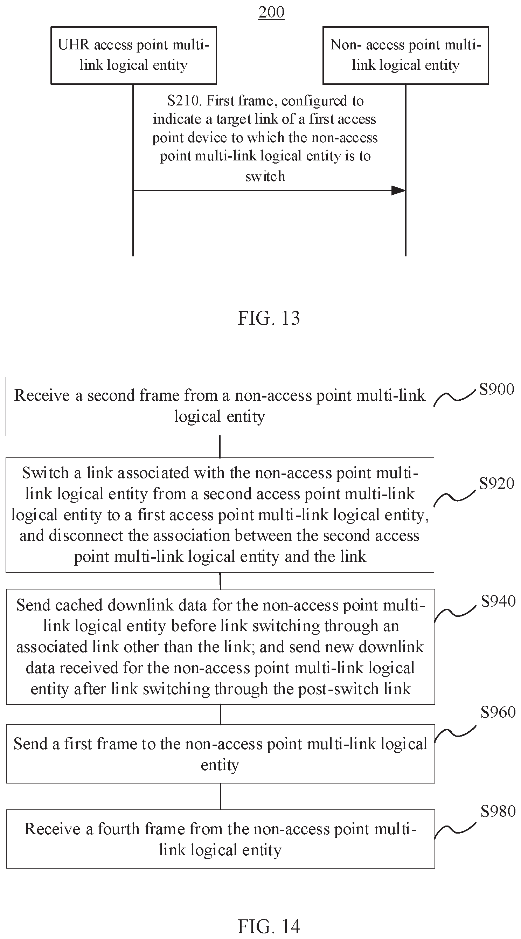

FIG. 13 shows a schematic flowchart of a communication method in a wireless local area network according to embodiments of the present application.

As shown in FIG. 13, the communication method in the wireless local area network may include the following step:
S210. Send, by a UHR access point multi-link logical entity, a first frame to a non-access point multi-link logical entity, where the first frame includes first link identifier information, and the first link identifier information is configured to indicate a target link of the first access point multi-link logical entity (that is, a target access point multi-link logical entity, such as a target AP MLD), to which the non-access point multi-link logical entity is to switch.

In some embodiments, the UHR access point multi-link logical entity may be a UHR non-collocated multi-access point multi-link logical entity.

In some embodiments, the UHR access point multi-link logical entity may be a UHR AP MLD. The UHR access point multi-link logical entity includes a first access point multi-link logical entity (for example, EHT AP MLD2, referred to as AP MLD2 below) and a second access point multi-link logical entity (for example, EHT AP MLD1, referred to as AP MLD1 below) that are affiliated with the UHR AP MLD. The second access point multi-link logical entity includes a plurality of links (for example, Link0 and Link1) associated with a non-access point multi-link logical entity (for example, a non-AP STA MLD, referred to as STA MLD below).

It can be understood that the UHR access point multi-link logical entity sending a frame to the non-access point multi-link logical entity may be sent through an access point multi-link entity (that is, the second access point multi-link logical entity, or referred to as original AP MLD, serving AP MLD) associated with the non-access point multi-link logical entity in the UHR access point multi-link logical entity, or may be sent through a UHR control module (for example, a non-collocated (Non-collocated) control module) in the UHR access point multi-link logical entity, or indicated by the UHR control module to be sent by the second access point multi-link logical entity.

In some embodiments, the UHR control module may be the UHR AP MLD UMAC, or may be other hardware or software, basic or independent control device.

In some embodiments, the first frame is configured to indicate roaming reconfiguration.

In some embodiments, the first frame may be a BTM roaming frame, for example, the first frame may be a BTM roaming reconfigure (BTM Roaming Reconfigure) frame.

In some embodiments, the BTM roaming reconfigure frame may include a UHR mobility domain element for indicating whether the UHR multi-link logical entity has seamless transition capability.

Optionally, the target link includes one or more links associated between the non-access point multi-link logical entity and the second access point multi-link logical entity.

In some embodiments, the sending, by a UHR access point multi-link logical entity, a first frame to the non-access point multi-link logical entity may include:
sending, by a second access point multi-link logical entity, a first frame to the non-access point multi-link logical entity;
sending, by the first access point multi-link logical entity, a first frame to the non-access point multi-link logical entity; or
instructing by a UHR control module to send a first frame to the non-access point multi-link logical entity.

In some embodiments, the non-access point multi-link logical entity switching to the target link of the first access point multi-link logical entity may mean that the non-access point multi-link logical entity expects to disconnect the association of the target link (for example, Link0) with the second access point multi-link logical entity (that is, the original AP MLD, for example, AP MLD1), and expects to associate the target link with the first access point multi-link entity (that is, the target AP MLD, for example, AP MLD2) affiliated with the same UHR AP MLD.

Optionally, the first link identifier information includes logic entity identifier information of the first access point multi-link logical entity and link information of the target link.

Optionally, the first link identifier information may be carried in a common information field in the BTM roaming frame.

Optionally, the logical entity identifier information of the first access point multi-link logical entity may be an MLD AP identifier of the first access point multi-link logical entity. Optionally, the link information of the target link may include at least one of the number of links, link identifiers, a link switching order, and link priorities.

Optionally, the common information field may include an MLD AP ID field and a links information field, where the MLD AP ID field is configured to indicate the MLD AP ID of the first access point multi-link logical entity to be switched to, and the links information field is configured to indicate link information of the target link.

Optionally, the links information field may include a link number (Link Num) field and one or more link identifier (Link ID) fields.

In some embodiments, the first frame may include a first indication for indicating a switching manner of the target link (for example, a disconnection manner or a deletion manner).

Optionally, the first indication may be carried in a STA control field in the BTM roaming frame.

Optionally, the switching manner may be immediate switching.

Optionally, the switching manner may be delayed switching. Optionally, in this case, the first indication may further indicate a delay duration of the delayed switching.

In a specific embodiment, the first indication is configured to indicate a link deletion mode, or a link deletion mode and a link deletion count, so as to achieve delayed disconnection.

In some embodiments of the present application, before the UHR access point multi-link logical entity sends a first frame to the non-access point multi-link logical entity, the method 200 further includes:
sending, by the non-access point multi-link logical entity, a second frame to the ultra high reliability UHR access point multi-link logical entity, where the second frame is configured to initiate a roaming request.

In some embodiments, the sending, by the non-access point multi-link logical entity, a second frame to the ultra high reliability UHR access point multi-link logical entity may include:
sending, by the non-access point multi-link logical entity, the second frame to the second access point multi-link logical entity; or
sending, by the non-access point multi-link logical entity, the second frame to the first access point multi-link logical entity.

In some embodiments, the second frame includes second link identifier information, and the second link identifier information is configured to indicate a link of an access point multi-link logical entity to which the non-access point multi-link logical entity requests to switch.

For example, after receiving the second frame, the UHR access point multi-link logical entity obtains that the non-access point multi-link logical entity expects to switch the target link from the second access point multi-link logical entity to the first access point multi-link logical entity. Therefore, the UHR AP MLD UMAC may instruct (including indirectly instruct or directly control) to disconnect the association between the second access point multi-link logical entity and the target link, and instruct (including indirect instruct or directly control) the first access point multi-link logical entity to associate with the target link, that is, the first access point multi-link logical entity associates with the non-access point multi-link logical entity through the target link.

Optionally, the second frame may be a BTM roaming request frame.

Optionally, the second link identifier information may be carried in a common information field in the BTM roaming request frame.

Optionally, the common information field of the BTM roaming request frame may include an MLD AP ID field and a links information field, where the MLD AP ID field is configured to indicate the MLD AP ID of the access point multi-link logical entity to which the non-access point multi-link logical entity requests to switch, and the links information field is configured to indicate link information of the link requested to be switched by the non-access point multi-link logical entity. Optionally, the link information may include at least one of the number of links, link identifiers, a link switching order, and link priorities.

Optionally, the BTM roaming request frame may further include a UHR mobility domain element for indicating whether the non-access point multi-link logical entity has UHR seamless transition capability.

Optionally, the first link identifier information may be determined based on the second link identifier information.

In some embodiments of the present application, after the sending, by the UHR access point multi-link logical entity, a first frame to the non-access point multi-link logical entity, the method 200 further includes:
instructing, by the UHR control module, disconnection of the association between the second access point multi-link logical entity and the target link, and association between the first access point multi-link logical entity and the target link.

For example, during the wireless roaming process, the UHR AP MLD UMAC may indirectly instruct or directly control the second access point multi-link logical entity to disconnect the association with the target link (for example, Link0), and indirectly instruct or directly control the first access point multi-link logical entity to establish association with the target link, thereby completing the link switching on the AP side.

In some embodiments, the UHR AP MLD UMAC may alternatively share or copy the unicast key obtained based on the UMAC address of the UHR AP MLD and stored in the UHR AP MLD UMAC to the first access point multi-link logical entity, so that during link switching in wireless roaming, the non-access point multi-link logical entity and the first access point multi-link logical entity do not need to perform handshake negotiation on the unicast key, reducing frame overhead during the roaming process and lowering the delay of the roaming process.

In some embodiment of the present application, the method 200 further includes:
determining, by the UHR access point multi-link logical entity, that the target link of the non-access point multi-link logical entity has switched to being associated with the first access point multi-link logical entity when a preset condition is satisfied.

In some embodiments, the preset condition is configured to indicate whether the non-access point multi-link logical entity and the UHR access point multi-link logical entity have both completed preparation for link switching configuration.

In some embodiments, the preset condition includes at least one of the following:
the UHR point multi-link logical entity receiving a fourth frame from the non-access point multi-link logical entity; and
a preset time having elapsed since the UHR access point multi-link logical entity sent the first frame.

Optionally, the fourth frame includes fourth link identifier information. The fourth link identifier information corresponds to the first link identifier information.

Optionally, the fourth frame may be a BTM roaming confirm (BTM Roaming Confirm) frame.

In some embodiments, after the UHR access point multi-link logical entity sends the first frame and a preset time elapses, if no notification of link reconfiguration failure is received from the non-access point multi-link logical entity, the link reconfiguration of the non-access point multi-link logical entity is considered successful.

In some embodiments, the fourth frame may include a fourth indication configured to indicate whether the non-access point multi-link logical entity has completed the operation requested by the first frame.

Optionally, the fourth indication may be carried in a status code field of a BTM roaming frame.

In some embodiments, after the target link of the non-access point multi-link logical entity has switched to being associated with the first access point multi-link logical entity, the method further includes:
sending, by the UHR access point multi-link logical entity, buffered downlink data to the non-access point multi-link logical entity, where the buffered downlink data is downlink data buffered on the target link before switching.

In some implementations, the sending, by the UHR access point multi-link logical entity, buffered downlink data to the non-access point multi-link logical entity includes:
sending, by the UHR access point multi-link logical entity, the buffered downlink data to the non-access point multi-link logical entity through the second access point multi-link logical entity; and/or
sending, by the second access point multi-link logical entity, the buffered downlink data to the first access point multi-link logical entity, and sending, by the first access point multi-link logical entity, the buffered downlink data to the non-access point multi-link logical entity.

For example, after the target link of the non-access point multi-link logical entity has switched to being associated with the first access point multi-link logical entity, the UHR access point multi-link logical entity may send the buffered downlink data on the target link before switching to the non-access point multi-link logical entity through the original AP MLD. For example, after the target link of the non-access point multi-link logical entity has switched to being associated with the first access point multi-link logical entity, the UHR control module may send the buffered downlink data on the target link before switching through at least one associated link other than the post-switch target link, where the at least one associated link is a link, other than the target link, associated between the non-access point multi-link logical entity and the second access point multi-link logical entity.

For example, after the target link of the non-access point multi-link logical entity has switched to being associated with the first access point multi-link logical entity, the UHR access point multi-link logical entity may send the buffered downlink data on the target link before switching to a target AP MLD through the original AP MLD, then the target AP MLD sends the buffered downlink data to the non-access point multi-link logical entity.

In some embodiments, the target link of the non-access point multi-link logical entity having switched to being associated with the first access point multi-link logical entity may include: the target link to be switched that is associated with the non-access point multi-link logical entity having completed, on the UHR access point multi-link logical entity side, disconnection of association with the second access point multi-link logical entity and association with the first access point multi-link logical entity.

The UHR control module instructing to send the buffered downlink data for the target link before switching through at least one associated link other than the post-switch target link may mean: due to the at least one or more links switched on the UHR AP MLD side, downlink data buffered before switching needs to continue to be sent to the non-access point multi-link logical entity through other links of the second access point multi-link logical entity that are still associated. For new data obtained by the UHR AP MLD and to be sent to the non-access point multi-link logical entity, the UHR AP MLD UMAC may instruct the newly associated first access point multi-link logical entity to send the data through the newly associated link to the non-access point multi-link logical entity.

In some embodiments, the UHR control module instructing to send the buffered downlink data for the target link before switching through at least one associated link other than the post-switch target link includes:
enabling, by the UHR control module, the buffered downlink data to be accessible to the at least one associated link other than the post-switch target link; and instructing by the UHR control module to send the buffered downlink data through the at least one associated link.

In some embodiments, the enabling, by the UHR control module, the buffered downlink data to be accessible to the at least one associated link other than the post-switch target link includes:
instructing, by the UHR control module, to share or copy the buffered downlink data to the at least one associated link other than the post-switch target link includes:
instructing by the UHR control module to send the buffered downlink data to an external storage device, where the at least one associated link may be in communication connection with the external storage device; and/or
instructing by the UHR control module to send the buffered downlink data to the UHR control module.

For example, the UHR control module may instruct the access point multi-link logical entity caching the downlink data to transmit the corresponding downlink data back to the UHR control module, and the UHR control module instructs other access point multi-link logical entities associated with the non-access point multi-link logical entity to continue forwarding these downlink data.

Additionally or alternatively, the UHR control module may instruct the access point multi-link logical entity caching the downlink data to allow other links associated with the non-access point multi-link logical entity to continue sending the corresponding downlink data by means such as direct sending, sharing, or copying.

Additionally or alternatively, the UHR control module may instruct the access point multi-link logical entity caching the downlink data to send the buffered downlink data to an external storage device (for example, a cloud server or a local server), for the external storage device to continue sending the data to the non-access point multi-link logical entity.

In some embodiments, after the target link of the non-access point multi-link logical entity has switched to being associated with the first access point multi-link logical entity, the method further includes:
instructing, by the UHR control module, the second access point multi-link logical entity to receive uplink data from the non-access point multi-link logical entity preferentially through the post-switch target link.

In some embodiments, after the target link of the non-access point multi-link logical entity has switched to being associated with the first access point multi-link logical entity, the method further includes:
instructing by the UHR control module to send data received after switching of the target link and destined for the non-access point multi-link logical entity through the post-switch target link to the non-access point multi-link logical entity.

In some embodiments, after the target link of the non-access point multi-link logical entity has switched to being associated with the first access point multi-link logical entity, the method 200 further includes:
sending, by the UHR point multi-link logical entity, a fifth frame to the non-access point multi-link logical entity, the fifth frame including fifth link identifier information;
where the fifth link identifier information is configured to indicate switching one or more remaining links of the non-access point multi-link logical entity to being associated with the first access point multi-link logical entity, the one or more remaining links including one or more links, other than the target link, among links associated between the non-access point multi-link logical entity and the second access point multi-link logical entity.

In some embodiments, the fifth frame may be a BTM roaming reconfigure frame for completing roaming switching of all links of the non-access point multi-link logical entity.

In some embodiments, the fifth frame may be sent by the UHR access point multi-link logical entity through an access point multi-link logical entity corresponding to a remaining non-switched link (for example, the second access point multi-link logical entity), or may alternatively be sent through an access point multi-link logical entity corresponding to the target link (that is, the first access point multi-link logical entity).

In some embodiment of the present application, the method 200 further includes:
determining, by the UHR access point multi-link logical entity, first key information of the UHR access point multi-link logical entity based on an upper media access control UMAC address of the UHR access point multi-link logical entity. The first key information may include unicast key information, such as PTK.

In some embodiments, the first key information may be generated by the UHR control module.

In some embodiments, the first key information is stored in the UHR control module.

In some embodiments, the method further includes:
sharing, copying, or sending, by the UHR control module, the first key information to the first access point multi-link logical entity, for use by associated links of the first access point multi-link logical entity.

In some embodiments, the first key information may be shared, copied, or sent by the UHR control module to a plurality of access point multi-link logical entities in the access stage, or shared, copied, or sent to the access point multi-link logical entity to be switched to, such as the first access point multi-link logical entity, during the AP MLD link switching process in the wireless roaming process.

In some embodiments, the first key information is obtained by computation based on the UHR AP MLD UMAC address. For example, the PTK key information is obtained by computation based on the UHR AP MLD UMAC address.

In some embodiments, the method further includes:
sending, by the UHR access point multi-link logical entity, the unicast key information of the UHR access point multi-link logical entity to the non-access point multi-link logical entity; and
sending, by the UHR access point multi-link logical entity, multicast key information of one or more links of the first access point multi-link logical entity to the non-access point multi-link logical entity.

In some embodiment of the present application, the method further includes:
determining, by the UHR access point multi-link logical entity, the multicast key information of one or more links of the first access point multi-link logical entity based on one or more lower media access control LMAC addresses of the first access point multi-link logical entity.

In some embodiments, the multicast key information may include a fifth indication. The fifth indication is configured to indicate link information corresponding to the multicast key information.

In some embodiments, the fifth indication may be carried in an AP MLD ID field of the MLO GTK KDE, the MLO IGTK KDE, and the MLO BIGTK KDE fields.

In some embodiments, the type of the multicast key information may include at least one of a group temporal key (GTK), an integrity group temporal key (IGTK), and a beacon integrity group temporal key (BIGTK).

In some embodiments of the present application, before the non-access point multi-link logical entity sends a second frame to the UHR access point multi-link logical entity, the method 200 further includes:
sending, by the UHR access point multi-link logical entity, a ninth frame to the non-access point multi-link logical entity, where the ninth frame is configured to request the non-access point multi-link logical entity to send the second frame.

Optionally, the ninth frame may be a BTM roaming query frame. The BTM roaming query frame is configured to induce or request the non-access point multi-link logical entity to send a BTM roaming request frame.

In some embodiments of the present application, before the UHR access point multi-link logical entity sends a first frame to the non-access point multi-link logical entity, the method 200 further includes:
sending, by the UHR access point multi-link logical entity, a sixth frame to the non-access point multi-link logical entity, the sixth frame being configured to indicate that the UHR access point multi-link logical entity has seamless transition capability.

In some embodiments, the sixth frame includes a UHR mobility domain element, the UHR mobility domain element being configured to indicate that the UHR access point multi-link logical entity has seamless transition capability.

In some implementations, the sixth frame may include at least one of the following:
a beacon frame (Beacon Frame), a probe response frame (Probe Response Frame), an association request frame (Association Request Frame), an association response frame (Association Response Frame), an authentication frame (Authentication Frame), configured to declare the seamless transition capability of the UHR AP MLD (for example, to a non-access point multi-link logical entity).

In some embodiments, the non-access point multi-link logical entity starting roaming may be a decision made by the non-access point multi-link logical entity itself. For example, the non-access point multi-link logical entity decides to start roaming based on the current link status.

In other embodiments, the non-access point multi-link logical entity starting roaming may alternatively be a decision made by the UHR access point multi-link logical entity. For example, the second access point multi-link logical entity may decide to trigger the non-access point multi-link logical entity to start roaming based on the uplink signal quality of the non-access point multi-link logical entity.

In some embodiments, the target link may be determined by the non-access point multi-link logical entity, for example, by the multi-access point multi-link logical entity based on the quality of uplink signals sent by a plurality of access point multi-link logical entities of the UHR access point multi-link logical entity.

In some embodiments, the method further includes:
sending, by the non-access point multi-link logical entity, a seventh frame to a plurality of access point multi-link logical entities of the UHR access point multi-link logical entity; and
receiving, by the non-access point multi-link logical entity, an eighth frame sent by the plurality of access point multi-link logical entities of the UHR access point multi-link logical entity, the eighth frame being configured to determine the first access point multi-link logical entity.

In some embodiments, the non-access point multi-link logical entity sends the seventh frame on a plurality of links associated with the UHR access point multi-link logical entity respectively. The non-access point multi-link logical entity receives a plurality of eighth frames from the UHR access point multi-link logical entity in response to the seventh frame; then the non-access point multi-link logical entity determines, based on the plurality of eighth frames, the target link of the first access point multi-link logical entity to which the non-access point multi-link logical entity is to switch.

Optionally, the seventh frame may be a probe request frame, and the eighth frame may be a probe response frame.

In some embodiments, the non-access point multi-link logical entity determining the target link of the first access point multi-link logical entity based on the plurality of eighth frames includes: determining, by the non-access point multi-link logical entity based on the plurality of eighth frames, quality of a plurality of signals of a plurality of links corresponding to the plurality of eighth frames respectively; and determining, by the non-access point multi-link logical entity, the target link of the first access point multi-link logical entity based on the quality of the plurality of signals.

In some embodiments, the UHR access point multi-link logical entity (for example, the UHR control module) may provide a recommended target link set and link priorities to the non-access point multi-link logical entity, where the link priorities may be determined based on link loads of neighbor access point multi-link logical entities of the second access point multi-link logical entity. Further, the UHR access point multi-link logical entity (for example, the UHR control module) may inform the non-access point multi-link logical entity of the target link set and the link priorities. The non-access point multi-link logical entity may determine the target link based on the target link set and the link priorities in combination with link signal quality (for example, obtained through probe response frames).

In some embodiments, before the non-access point multi-link logical entity sends a second frame to the UHR access point multi-link logical entity, the method further includes:
receiving, by the non-access point multi-link logical entity, a third frame from the UHR access point multi-link logical entity, where the third frame includes third link identifier information, and the third link identifier information is configured to indicate a candidate access point multi-link logical entity and/or a candidate link to which the non-access point multi-link logical entity is recommended to switch by the UHR access point multi-link logical entity.

In some embodiments, the third frame includes a candidate list field, where the candidate list field includes at least one subelement, each subelement corresponds to one candidate access point multi-link logical entity, and each subelement is configured to indicate one or more candidate links of the corresponding candidate access point multi-link logical entity.

The subelement includes at least one of the following fields:
a first field, configured to indicate address information of the candidate access point multi-link logical entity;
a second field, configured to indicate whether it is recommended that the non-access point multi-link logical entity switch to all candidate links of the candidate access point multi-link logical entity; or
a third field, configured to indicate one or more candidate links of the candidate access point multi-link logical entity to which switching is recommended.

Optionally, the third field may indicate one or more recommended candidate links in a bitmap manner.

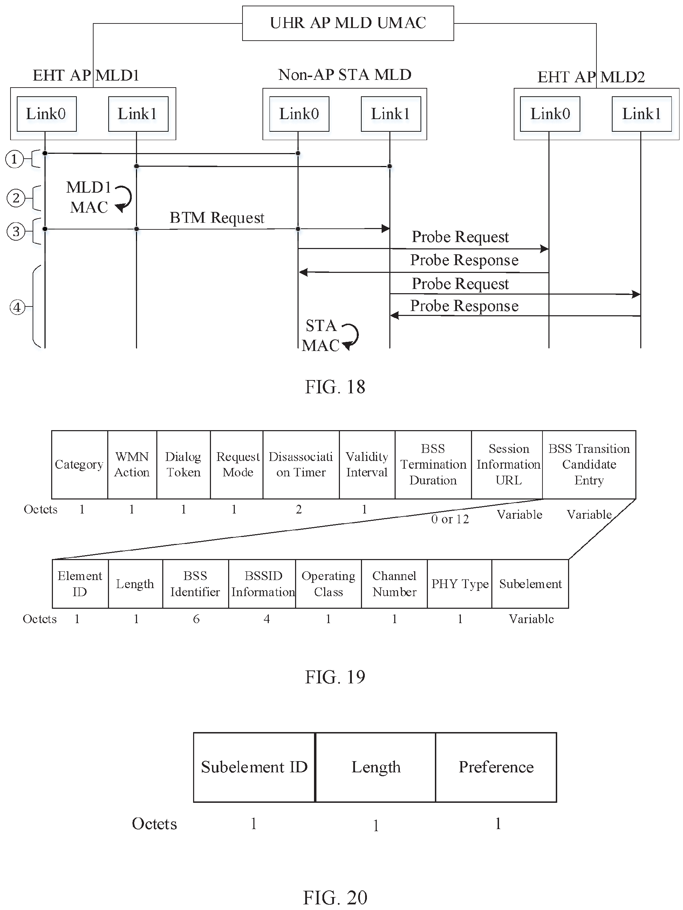

The structure of the third frame is further described below with reference to FIG. 19 to FIG. 21.

In some embodiments, neighbor access point multi-link logical entities of the second access point multi-link logical entity may evaluate uplink signal quality. For example, by obtaining signal quality of a corresponding link through a probe request frame, and further reporting the signal quality of the link to the UHR control module, the UHR control module may determine the target link based on the signal quality of the link and the link load.

To facilitate understanding of the embodiments of the present application, the following takes two AP MLDs and two associated links as an example for illustration. In other embodiments, there may alternatively be two or more AP MLDs and/or two or more associated links. Those skilled in the art should know that in other embodiments of the present application, for cases involving two or more AP MLDs and/or two or more associated links, there may be further possible link switching manners.

FIG. 14 is a schematic flowchart of a communication method according to embodiments of the present application.

In the embodiments, the UHR AP MLD includes a first access point multi-link logical entity (for example, EHT AP MLD2, referred to as AP MLD2 below) and a second access point multi-link logical entity (for example, EHT AP MLD1, referred to as AP MLD1 below) affiliated with the UHR AP MLD. The second access point multi-link logical entity includes a plurality of links (for example, Link0 and Link1) associated with a non-access point multi-link logical entity (for example, a non-AP STA MLD, referred to as STA MLD below).

It can be understood that Link0 and Link1 have different frequency bands or different channels of the same frequency band. For example, Link0 may operate in the 2.4 GHz frequency band and Link1 in the 5 GHz frequency band, or Link0 may operate in the 5 GHz frequency band and Link1 in the 2.4 GHz frequency band. In some embodiments, Link2 may be associated between MLD1 and STA MLD, and may operate, for example, in the 6 GHz frequency band.

As shown in FIG. 14, the communication method may include the following steps.

Step S900: Receive a second frame from a STA MLD.

Specifically, the second frame may be a BTM roaming request (BTM Roaming Request) frame. The BTM roaming request frame includes indication information. The indication information indicates the AP MLD to be switched to and the link to be switched.

The BTM roaming request may further include a mobility domain element for indicating whether the STA MLD has UHR seamless transition capability.

Step S920: Switch the link associated with the STA MLD from AP MLD1 to AP MLD2, and disconnect the association between AP MLD1 and the link.

Specifically, after receiving the second frame, the UHR AP MLD obtains that the STA MLD expects to switch Link0 from the original AP MLD (that is, AP MLD1) to a new AP MLD (that is, AP MLD2). Accordingly, the UHR AP MLD disconnects the association between AP MLD1 and Link0, and associates AP MLD2 with Link0, that is, AP MLD2 associates with the STA MLD through Link0.

In the embodiments, the UHR AP MLD may obtain the second frame from the non-AP STA MLD through AP MLD1.

Step S940: Send buffered downlink data for the STA MLD before link switching through an associated link other than Link0; and send new downlink data received for the STA MLD after link switching through the post-switch link.

After the UHR AP MLD completes the switching of Link0 in the above steps, the UHR AP MLD continues to send the buffered downlink data for the non-AP STA MLD before switching to the non-AP STA MLD through an associated link other than Link0 (for example, Link1). Specifically, the UHR AP MLD sends, through other links that remain associated with the non-AP STA MLD, downlink data that was buffered before the switching and originally transmitted to the non-AP STA MLD through Link0 prior to the switching. The links that remain associated include links via which MLD1 maintains association with the non-AP STA MLD and links via which MLD2 maintains association with the non-AP STA MLD.

In addition, the UHR AP MLD sends the newly received downlink data for the non-AP STA MLD after the switching to the non-AP STA MLD through the post-switch Link0.

By continuing to send data to the non-AP STA MLD in the above manner after switching, it is ensured that data before and after switching can be sent to the non-AP STA MLD without interruption, ensuring continuity of data transmission during the seamless roaming process and ensuring transmission reliability of wireless communication.

Step S960: Send a first frame to the STA MLD.

After completion of the link switching, the UHR AP MLD sends a first frame to the STA MLD to notify the STA MLD.

In some embodiments, the first frame may be a BTM roaming reconfigure (BTM Roaming Reconfigure) frame.

In some embodiments, the BTM roaming reconfigure frame may include a UHR mobility domain element for indicating whether the UHR AP MLD has seamless transition capability.

In some embodiments, the UHR AP MLD may send the first frame to the non-AP STA MLD through the originally associated AP MLD1 or through other links associated with the non-AP STA MLD, or may directly send the first frame through the UHR AP MLD UMAC.

In the embodiments, in the access stage, the UHR AP MLD UMAC has already shared or copied the unicast key generated for AP MLD2 in the stage of the access procedure to AP MLD 1. Therefore, during the seamless roaming process, the UHR AP MLD UMAC does not need to share the unicast key with AP MLD1 again.

Alternatively, in another embodiment, in the access stage, the UHR AP MLD UMAC does not share or copy the unicast key generated for AP MLD2 in the stage of the access procedure to AP MLD 1. Therefore, during the seamless roaming process, optionally, before step S960, the UHR AP MLD UMAC needs to share or copy the stored unicast key to the post-switch AP MLD (that is, MLD 1), to complete the link switching on the side of the UHR AP MLD, thereby avoiding the need for the non-AP STA MLD to perform a 4-way handshake for the key again when switching to a new AP MLD during the roaming process, reducing frame overhead during roaming and shortening the delay of roaming.

Step S980: Receive a fourth frame from the STA MLD.

After receiving the first frame, the STA MLD correspondingly adjusts the management of the links for receiving downlink data from the UHR AP MLD and for sending uplink data to the UHR AP MLD (for example, the STA MLD disconnects the association with AP MLD1 on Link0), to implement seamless roaming.

The internal configuration adjustment steps of the non-AP STA MLD include: adjusting the identifier information of the AP MLD in the field information corresponding to the multicast key, so that the multicast key can automatically correspond to the corresponding link of the post-switch AP MLD, avoiding confusion of same-frequency links of different AP MLDs, and saving frame overhead of re-handshake.

After completion of configuration adjustment, the non-AP STA MLD sends a fourth frame to the UHR AP MLD. The fourth frame may be a BTM roaming confirm (BTM Roaming Confirm) frame.

In other embodiments, after completion of configuration adjustment, the non-AP STA MLD may alternatively not send the fourth frame. Instead, the non-AP STA MLD and the UHR AP MLD determine whether both parties have completed the switching configuration according to a specified time period; that is, after a specified time period following the UHR AP MLD sending the first frame, it is assumed by default that the non-AP STA MLD has completed the switching. If the configuration cannot be completed within the specified time period, a notification is sent to inform the other party of switching failure.

In other embodiments, additionally, after one or a group of links between the non-AP STA MLD and the original AP MLD of the UHR AP MLD complete switching, the remaining link switching between the non-AP STA MLD and the original AP MLD is completed using similar method steps, and details are not repeated herein.

In other embodiments, the EHT AP MLD affiliated with the UHR AP MLD may further include a corresponding EHT AP MLD UMAC, and the EHT AP MLD UMAC is configured to be directly communicatively connected to the DS, so as to be compatible with other communication networks (for example, Wi-Fi 7).

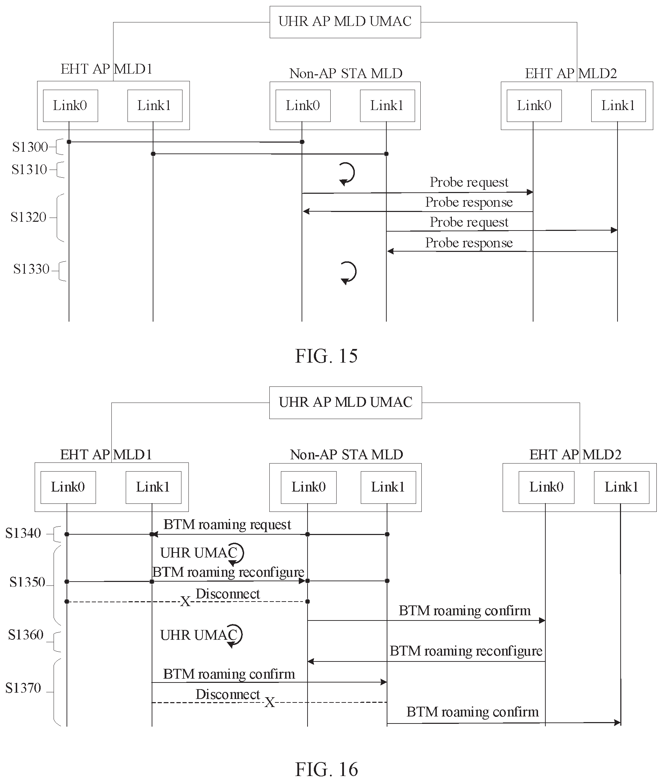

FIG. 15 shows a partial flowchart of a wireless roaming procedure in a communication method according to embodiments of the present application. As shown in FIG. 15, the method may include the following steps.

Step S1300: The following associations are established in the access procedure: an association between Link0 of non-AP STA MLD (referred to as STA MLD below) and Link0 of EHT AP MLD1 (referred to as AP MLD1 below), and an association between Link1 of STA MLD and Link1 of EHT AP MLD1.

It can be understood that the association between Link0 of STA MLD and Link0 of MLD1 means that two ends of the link Link0 are associated with STA MLD and AP MLD1, respectively.

Step S1310: The STA MLD decides whether to roam based on the current link status.

In some implementations, the current link status may include at least one of the following:
signal quality of a link associated between AP MLD1 and the STA MLD;
a distance between the AP MLD and STA MLD on the currently associated link;
a load condition of the AP MLD on the currently associated link; and
a load condition of the current link.

Optionally, the link status may further include other parameters that affect the signal quality of the associated link between AP MLD and STA MLD. This is not limited in the present application.

In other embodiments, alternatively, the UHR AP MLD (for example, by UHR AP UMAC, AP MLD1, or AP MLD2) may determine whether the STA MLD roams or induce the STA MLD to initiate roaming. For example, the UHR AP UMAC may send a BTM roaming query frame to the STA MLD according to the link status of the associated link of the STA MLD to induce the STA MLD to make a decision on roaming.

Step S1320: In a signal coverage overlap area, the STA MLD sends probe request frames to neighbor AP MLDs (for example, AP MLD2) by simultaneously or sequentially using all links of the STA MLD. Each neighbor AP MLD is connected to the same UHR AP MLD UMAC, or affiliated with the same UHR AP MLD. Each AP MLD (for example, AP MLD2) responds to the probe request frame from the STA MLD by using a probe response frame.

Step S1330: The STA MLD determines a link status of each link based on the probe response frame returned by each link, and determines a target AP MLD (for example, AP MLD2) to be switched to based on the link status of each link.

Optionally, the link status may include at least one of signal quality of a link between the AP MLD and the STA MLD determined based on the probe response frame, a distance between the AP MLD and the STA MLD, a load condition of the AP MLD, and a load condition of the link.

Optionally, in S1330, the STA MLD may further determine the switching order of the link during the seamless roaming process of switching to AP MLD2. For example, Link0 is first switched from AP MLD1 to AP MLD2, that is, the STA MLD disconnects the association with Link0 of AP MLD1 and associates with Link0 of AP MLD2.

FIG. 16 shows a schematic flowchart of a remaining portion of the seamless roaming procedure shown in FIG. 15. As shown in FIG. 16, the seamless roaming procedure may further include the following steps.

Step S1340: The STA MLD selects an appropriate link from the associated links as a target link to be switched, and sends a BTM roaming request frame to the original AP MLD (that is, AP MLD1) associated with the target link, where the BTM roaming request frame may carry AP MLD information and link information corresponding to the target link. The BTM roaming request frame is configured to request switching from the original link (for example, AP MLD1 Link0) to the target link (for example, AP MLD2 Link0).

Optionally, after determining the target link, the STA MLD may send identifier information indicating the AP MLD to be switched to and link information of the target link to be switched to the UHR AP MLD, for example, to any associated AP MLD (for example, the originally associated AP MLD of the target link) affiliated with the UHR AP MLD, or alternatively to the UMAC of the UHR AP MLD.

Step S1350: The UHR AP MLD indicates (including indirectly indicate or directly control) link switching on the AP MLD side, specifically including the following steps:
1. The original AP MLD (that is, AP MLD1) transmits the above roaming request of the STA MLD back to the UMAC of the UHR AP MLD (hereinafter referred to as UHR UMAC). The UHR UMAC approves or rejects the above roaming request based on the link status (for example, load status) of the target link (Link0) of the target AP MLD (MLD2), and notifies the original AP MLD of the approval or rejection result;
2. When the UHR UMAC approves the above roaming request, the original AP MLD sends a BTM roaming reconfigure frame to the STA MLD through the corresponding receiving link;
3. When receiving the BTM roaming reconfigure frame, the STA MLD triggers link reconfiguration of the corresponding link (Link0) of the STA MLD (that is, link switching on the non-AP side, for example, switching the association between STA MLD Link0 and AP MLD1 Link0 to the association between STA MLD Link0 and AP MLD2 Link0); and
4. After completion of link reconfiguration, the STA MLD sends a BTM roaming confirm frame to AP MLD2 through the post-switch link (from STA MLD Link0 to AP MLD2 Link0), to notify the UHR AP MLD that the STA MLD has successfully completed link reconfiguration.

Step S1360: After the UHR AP MLD receives the BTM roaming confirm frame from the STA MLD, the UHR AP MLD UMAC updates the configuration of the target link (Link0).

Specifically, the UHR AP MLD may transmit new downlink data received after link switching preferentially through the newly associated Link0 between the STA MLD and AP MLD2. Before the link is successfully switched, the buffered downlink data that the UHR AP MLD buffered and originally intended to send to the STA MLD through Link0 before switching may continue to be sent through the remaining associated links (that is, non-switched associated links) between the UHR AP MLD and the STA MLD. Such buffered downlink data may be set by the UHR UMAC to be accessible by the AP MLD corresponding to the remaining associated links. Through such configuration, transmission of downlink data will not be interrupted due to roaming switching during the roaming procedure of the STA MLD, ensuring continuity of data transmission during roaming and improving data transmission reliability in wireless roaming.

In other embodiments, relative to steps S1350 and S1360, alternatively, the communication method may include the following steps.

Step S1352: The UHR AP MLD controls link switching on the AP MLD side, specifically including the following steps:
1. The original AP MLD (that is, AP MLD1) transmits the above roaming request of the STA MLD back to the UHR UMAC. The UHR UMAC approves or rejects the above roaming request based on the link status (for example, load status) of the target link (Link0) of the target AP MLD (that is, AP MLD2), and notifies the original AP MLD of the approval or rejection result;
2. When the UHR UMAC approves the above roaming request, the original AP MLD sends a BTM roaming reconfigure frame to the STA MLD through the corresponding receiving link; The UHR AP MLD UMAC updates configuration of the target link (Link0). The UHR AP MLD transmits data preferentially through the new link between Link0 of the STA MLD and Link0 of AP MLD2;
3. When receiving the BTM roaming reconfigure frame, the STA MLD triggers link reconfiguration of the corresponding link (Link0) of the STA MLD (that is, link switching on the non-AP side, for example, switching the association between STA MLD Link0 and AP MLD1 Link0 to the association between STA MLD Link0 and AP MLD2 Link0); and
4. After completion of link reconfiguration, the STA MLD sends a BTM roaming confirm frame to AP MLD2 through the post-switch link (from STA MLD Link0 to AP MLD2 Link0), to notify the UHR AP MLD that the STA MLD has successfully completed link reconfiguration.

In other embodiments, for the above step 4), alternatively:
4a. The STA MLD sends a BTM roaming confirm frame to AP MLD2, and the BTM roaming confirm frame indicates whether Link0 of the STA MLD is successfully reconfigured. When the reconfiguration of Link0 of the STA MLD is successful, the STA MLD sends a BTM roaming confirm frame to AP MLD2 through the post-switch link (from STA MLD Link0 to AP MLD2 Link0) to notify the UHR AP MLD that the STA MLD has successfully completed the reconfiguration.

In other embodiments, after the above step 4), optionally, the communication method further includes:
5a. When the UHR AP MLD does not receive the BTM roaming confirm frame sent by the STA MLD after a preset time interval, it confirms that the STA MLD has successfully completed the reconfiguration.

During the seamless roaming process, links other than Link0 of the STA MLD (for example, Link1) maintain connection and communication with AP MLD1.

Step S1370: Complete the switching of the remaining links between the STA MLD and the original AP MLD. For example, the following steps may be included:
1. The UHR AP MLD UMAC determines to perform switching of the remaining links. Optionally, the reconfiguration of the remaining links of the STA MLD may be triggered by a BTM roaming reconfigure frame received through an existing associated link (for example, Link1 of AP MLD1 or Link0 of AP MLD2);
2. After receiving the BTM roaming reconfigure frame, the STA MLD reconfigures the link, switching the associated link between Link1 of STA MLD and Link1 of AP MLD1 to an associated link between Link1 of STA MLD and Link1 of AP MLD2;
3. After reconfiguration, the STA MLD sends a BTM roaming confirm frame to AP MLD2 through the post-switch remaining link (for example, Link1); and
4. Roaming switching of all links of the STA MLD is completed, and the STA MLD is associated and communicates only with AP MLD2.

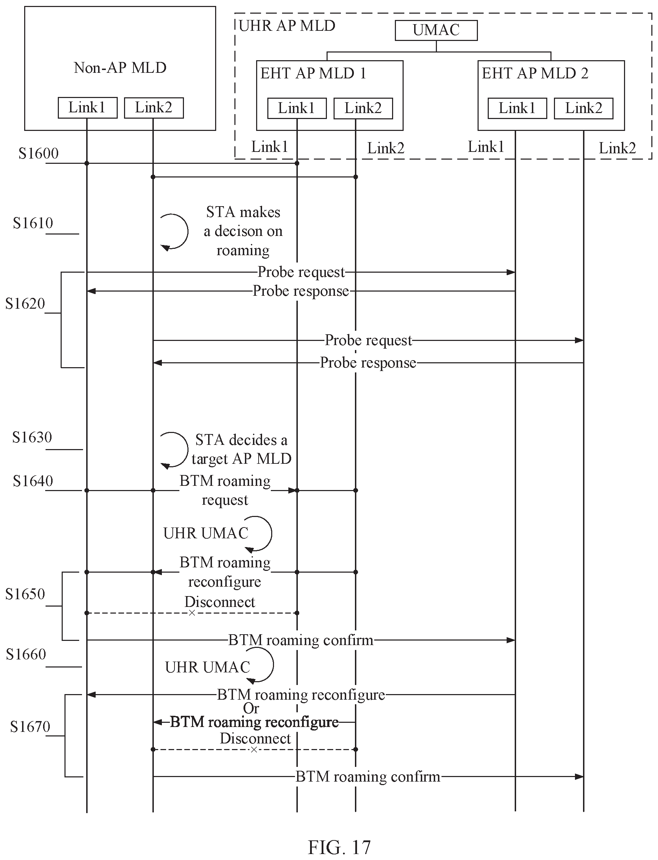

FIG. 17 shows a schematic flowchart of a seamless roaming procedure of a communication method according to another embodiment of the present application.

As shown in the figure, the seamless roaming procedure of the communication method may include the following steps.

Step S1600: A STA has completed access connection with AP1, and all links are associated.

Step S1610: The STA determines that roaming is required based on the current network status and decides to start roaming.

Step S1620: The STA sends a Probe Request (without carrying Multi-Link element) on each Link, and all Non-collocated AP MLDs affiliated with the UHR AP MLD reply with a Probe Response.

Step S1630: The STA measures signal quality based on the Probe Responses, and determines the Non-collocated AP MLD2 affiliated with the UHR AP MLD to which roaming is to be switched and the link switching order of the currently associated links.

Step S1640: The STA selects an appropriate Link from the associated links to send, to EHT AP MLD1 (denoted as AP MLD1), a BTM Roaming frame (for example, a BTM roaming request) containing a Roaming Request. The frame carries a Multi-Link reconfigure element, informing AP MLD1 of information of EHT AP MLD2 (denoted as AP MLD2) to which roaming switching is desired and a target link to be switched, that is, a link to be reconfigured, for example, a Link ID.

Step S1650: AP MLD1 sends a BTM Roaming ReConfigure frame to the STA via a corresponding receiving link, triggering the STA to perform reconfiguration of Link1. The STA disconnects Link1 from Link1 of AP MLD1 and reconfigures to Link1 of AP MLD2. After successful reconfiguration, the STA sends a BTM Roaming Confirm frame to AP MLD2 using the newly connected Link1 to confirm successful reconfiguration of Link1. During this process, Link2 of the STA always maintains connection and communication with Link2 of AP MLD1.

Step S1660: During the switching process, seamless data transmission processing is performed. After completion of switching of Link1, the UHR AP MLD UMAC forwards new service data destined for STA to Link1 of AP MLD2 for sending, while downlink service data buffered on Link2 of AP MLD1 may still be sent to STA through MLD1 Link2. After successful link switching, the uplink service data of STA is transmitted preferentially through the already switched Link 1. During this process, STA maintains data communication with MLD1 through Link2 and with MLD2 through Link1, respectively.

Step S1670: The UHR MLD UMAC decides to switch the remaining links, and may send a BTM Roaming ReConfigure frame to the STA through Link2 of AP MLD1 or Link1 of AP MLD2, triggering reconfiguration of Link2 of STA. After receiving the frame, the STA reconfigures Link 2 from AP MLD1 to AP MLD2. After successful reconfiguration, the STA sends a BTM Roaming Confirm frame to AP MLD2 on Link2 to confirm successful reconfiguration of Link2. At this point, roaming switching of all links of the STA is completed, and the STA connects and communicates only with AP MLD2.

The difference between the embodiment shown in FIG. 18 and the foregoing embodiments lies in that in this embodiment, roaming is initiated by the UHR AP MLD based on uplink signal quality.

In some embodiments, the difference from the foregoing exemplary embodiments further lies in that: First, the UHR AP MLD UMAC determines a target link set (that is, a set of links to be switched), and sets priorities of links in the target link set based on link loads of one or more neighbor APs of the originally associated AP MLD. Then, the UHR AP MLD UMAC sends the target link set and the link priorities to the non-AP STA MLD through the associated link between the original AP MLD and the non-AP STA MLD. The non-AP STA MLD determines a target link, that is, a link to be switched, based on the link priorities and probe response signal quality (probe response signal quality) of the link.

Referring to FIG. 18, this embodiment may be applied to a UHR AP logical entity architecture that has completed step 1710 of the access procedure, that is, the non-AP STA MLD is associated with AP MLD1 of the UHR AP MLD through link Link0, and the non-AP STA MLD is associated with AP MLD1 of the UHR AP MLD through link Link1. The roaming process in this embodiment includes the following steps.

Step S1720: AP MLD1 decides to cause the non-AP STA MLD prepare for roaming based on uplink signal quality. AP MLD1 notifies the UHR AP MLD UMAC of this information through a backhaul link. Then, the UHR AP MLD UMAC provides a target link set, and sets priorities of links in the target link set based on link loads of neighbor APs of AP MLD1. The UHR AP MLD UMAC notifies AP MLD1 of the target link set and the link priorities through a backhaul link.

Step S1730: AP MLD1 notifies the non-AP STA MLD of the target link set and the priorities of links in the target link set through a BTM request frame (BTM request frame).

The BTM request frame, together with downlink quality, may trigger the roaming process of the non-AP STA MLD.

Step S1740: The non-AP STA MLD sends probe requests to one or more neighbor AP MLDs (for example, AP MLD2) through all its links one by one, and receives corresponding probe responses. The neighbor AP MLDs are all affiliated with a same UHR AP MLD UMAC. Each neighbor AP MLD (for example, AP MLD2) sends a probe response to respond to the probe request from the non-AP STA MLD. The non-AP STA MLD evaluates the signal quality of probe responses corresponding to links in the target link set. The non-AP STA MLD determines a target link for roaming (for example, link Link0 of AP MLD2) based on a combination of link priority and probe response signal quality of the link. That is, in this step, the non-AP STA MLD determines the target link (for example, link Link0 between the non-AP STA MLD and AP MLD2).

After the non-AP STA MLD determines the target link, subsequent roaming steps may refer to descriptions in any other embodiment, and details are not repeated here.

FIG. 19 shows a format of a BTM request frame applicable to the embodiment described in FIG. 18. For example, the BTM request frame includes a BSS transition candidate entry field, and the field has a variable byte length.

The BSS transition candidate entry field may include 0 or more neighbor report elements. The neighbor report element includes a subelement (Subelement) field. The length of the subelement field may be variable, for example, 3 octets, 5 octets, or other lengths.

The subelement field may include a BSS transition candidate preference subelement field and/or a basic multi-link element.

As shown in FIG. 20, the BSS transition candidate preference subelement includes a preference field, and the length of the preference field can be 1 octet, 2 octets, or other lengths.

In one embodiment, the value of the preference field is configured to indicate a preference order of BSSs. For example, when the value of the preference field is 255, it indicates a most preferred candidate, that is, a most preferred AP MLD. When the value of the preference field is 1, it indicates a least preference candidate, that is, a least preferred AP MLD.

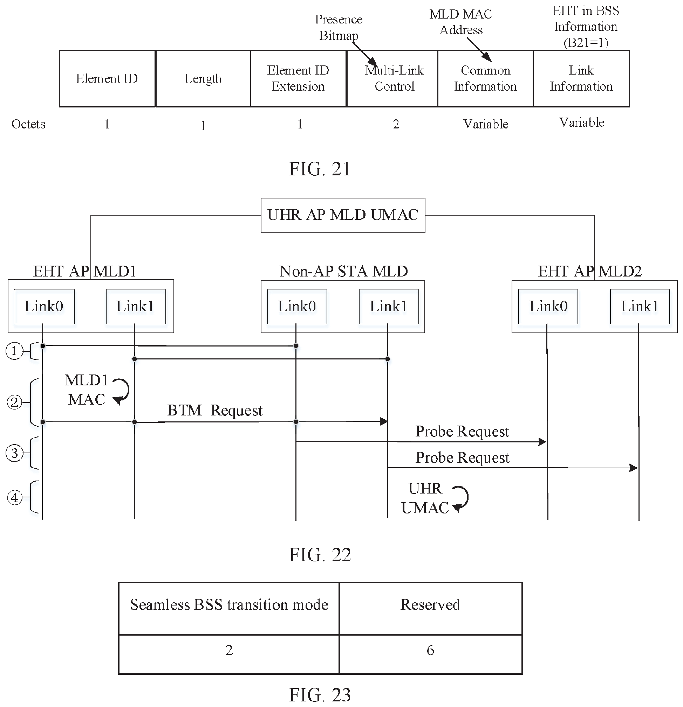

FIG. 21 shows a structure of a basic multi-link element (Basic Multi-Link Element) of a BSS transition candidate entry field according to yet another embodiment of the present application.

When an AP MLD, having no specific affiliated AP recommendations, intends to provide a preference to a reported AP MLD (reported AP MLD), all subfields in the presence bitmap (Presence bitmap) field may be set to 0, and no Per-STA configuration (Per-STA Profile) subfield is included in the basic multi-link element.

When an AP MLD, having only a recommended subset of affiliated APs, intends to provide a preference to a reported AP MLD, a link identifier information field (Link ID Info field) is included in common information of the basic multi-link element, and the value of the link identifier information field corresponds to a respective field value of the AP reported in the neighbor report element.

The difference between the embodiment shown in FIG. 22 and the foregoing exemplary embodiments lies in that the roaming triggering method is different, that is, roaming is initiated by the AP MLD based on uplink signal.

The difference between the embodiment shown in FIG. 22 and the foregoing exemplary embodiments further lies in that the determination method of the target link (that is, the link to be switched) is different. In that embodiment, each neighbor AP MLD first evaluates the signal quality of the probe request (uplink), and reports the uplink signal quality and the link load to the UHR AP MLD UMAC. The UHR AP MLD confirms the target link based on the combination of link load status and uplink signal quality.

In the embodiment shown in FIG. 22, this embodiment is applied to the UHR AP logical entity architecture in step S2010 of the access procedure, that is, the non-AP STA MLD is associated with AP MLD1 of the UHR AP MLD through link Link0, and the non-AP STA MLD is associated with AP MLD1 of the UHR AP MLD through link Link1. The roaming process in this embodiment includes the following steps.

Step S2020: The original AP MLD (for example, AP MLD1) causes the non-AP STA MLD to prepare for roaming based on uplink signal quality. The original AP MLD sends a roaming preparation message (Roaming preparation message) to one or more neighbor AP MLDs (for example, AP MLD2) through the UHR AP MLD UMAC. After receiving the message, each neighbor AP MLD reserves time to measure the probe request signal from the non-AP STA MLD. The original AP MLD notifies the non-AP STA MLD of the roaming preparation message through a BTM request frame.

Step S2030: The BTM request frame triggers the roaming process of the non-AP STA MLD. The non-AP STA MLD sends probe request signals to one or more neighbor AP MLDs (for example, AP MLD2 and AP MLD3) through all its links one by one, where these neighbor AP MLDs are all affiliated with the same UHR AP MLD UMAC.

Step S2040. The neighbor AP MLD of the original AP MLD evaluates the signal quality of the probe request signal of each link. The neighbor AP MLD reports the signal quality and link load of each link to the UHR AP MLD UMAC. The UHR AP MLD UMAC determines a target link for roaming based on a combination of load status and signal quality of each link. The UHR AP MLD UMAC notifies the original AP MLD (for example, AP MLD1) of the target link for roaming (for example, link Link0 between the non-AP STA MLD and AP MLD 2).

Through the embodiment shown in FIG. 22, on one hand, the probe signal quality is evaluated by the AP MLD instead of the non-AP STA MLD, thereby reducing the burden on the non-AP STA MLD. On the other hand, this embodiment does not require the non-AP MLD to notify the original AP MLD of the target link, nor does the AP MLD need to send a probe response to the non-AP STA MLD, thereby reducing frame overhead and improving seamless roaming efficiency.

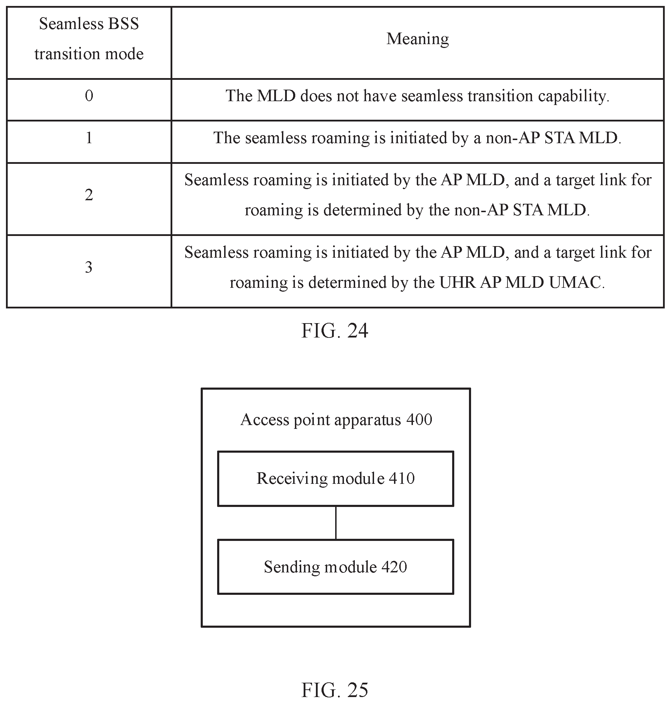

FIG. 23 and FIG. 24 show examples of formats of another UHR mobility domain field according to embodiments of the present application.

As shown in the figures, the difference from the embodiments shown in FIG. 3 and FIG. 4 lies in that in the ST capability field of the UHR mobility domain field, the seamless BSS transition mode field has a length of 2 bits, and the reserved field has a length of 6 bits. When the seamless BSS transition mode field has a length of 2 bits, the values of the field may be as shown in FIG. 24 and have different meanings.

A value of 0 for the seamless BSS transition mode field may indicate that the MLD does not have seamless transition capability. A value of 1 for the seamless BSS transition mode field may indicate that the seamless roaming is initiated by the non-AP STA MLD. A value of 2 for the seamless BSS transition mode field may indicate that the seamless roaming is initiated by the AP MLD, and that the target link for roaming (for example, the link to be switched during roaming) is determined by the non-AP STA MLD. A value of 3 for the seamless BSS transition mode field may indicate that the seamless roaming is initiated by the AP MLD, and that the target link for roaming is determined by the UHR AP MLD UMAC.

Below, the communication method according to the present application will be further described.

Embodiments of the present application provide a communication method in a wireless network, applied to a non-collocated (Non-collocated) control module of an ultra high reliability (UHR) non-collocated access point multi-link logical entity. The method includes: instructing by the UHR control module to send a first frame to a non-access point multi-link logical entity (Non-AP Multi-link logical entity), where the first frame includes first link identifier information, and the first link identifier information indicates one or more links that are associated with a first access point multi-link logical entity and to which the non-access point multi-link logical entity is to switch.

In an embodiment, the first link identifier information includes logical entity identifier information corresponding to the first access point multi-link logical entity and link information corresponding to the one or more links.

In an embodiment, before the UHR control module instructs to send the first frame to the non-access point multi-link logical entity, the method further includes instructing by the UHR control module to disconnect the association between a second access point multi-link logical entity and the one or more links and associate the first access point multi-link logical entity with the one or more links.

In an embodiment, before the UHR control module instructs to send the first frame to the non-access point multi-link logical entity, the method further includes receiving, by the UHR control module, a second frame from the non-access point multi-link logical entity, the second frame including second link identifier information, where the first link identifier information corresponds to the second link identifier information.

In an embodiment, the one or more links are associated with the non-access point multi-link logical entity and the second access point link logical entity respectively.

In an embodiment, the first frame further includes a first indication, and the first indication indicates a disconnection manner of the one or more links.

In an embodiment, the disconnection manner is delayed disconnection, and the first indication further indicates a delay duration of the delayed disconnection.

In an embodiment, the first frame further includes a second indication, and the second indication indicates whether the UHR control module has completed the operation requested by the second frame.

In an embodiment, after the instructing by the UHR control module to send the first frame to the non-access point multi-link logical entity, the method further includes:
in response to satisfying a preset condition, confirming by the UHR control module that the one or more links of the non-access point multi-link logical entity have switched to being associated with the first access point multi-link logical entity.

In an embodiment, the preset condition includes: the UHR control module receiving a fourth frame from the non-access point multi-link logical entity, the fourth frame including fourth link identifier information corresponding to the first link identifier information.

In an embodiment, the fourth frame may include a fourth indication, the fourth indication indicating whether the non-access point multi-link logical entity has completed the operation requested by the first frame.

In an embodiment, the preset condition includes: a preset time having elapsed after the UHR control module instructs to send the first frame.

In an embodiment, after the one or more links of the non-access point multi-link logical entity have switched to being associated with the first access point multi-link logical entity, the method further includes: instructing by the UHR control module to send buffered downlink data for the one or more links before switching through at least one associated link other than the one or more post-switch links, where the at least one associated link is associated with the non-access point multi-link logical entity and the second access point multi-link logical entity, respectively.

In an embodiment, the instructing, by the UHR control module, to send buffered downlink data for the one or more links before switching through at least one associated link other than the one or more post-switch links includes: enabling, by the UHR control module, the buffered downlink data to be accessible to the at least one associated link other than the one or more post-switch links; and instructing by the UHR control module to send the buffered downlink data through the at least one associated link.

In an embodiment, the enabling the buffered downlink data to be accessible to the at least one associated link other than the one or more post-switch links includes: instructing by the UHR control module to share or copy the buffered downlink data to the at least one associated link other than the one or more post-switch links; instructing by the UHR control module to send the buffered downlink data to an external storage device, where the at least one associated link may be in communication connection with the external storage device; or instructing by the UHR control module to send the buffered downlink data to the UHR control module.

In an embodiment, after the one or more links of the non-access point multi-link logical entity have switched to being associated with the first access point multi-link logical entity, the method further includes instructing, by the UHR control module, the second access point multi-link logical entity to receive uplink data from the non-access point multi-link logical entity preferentially through the one or more post-switch links.

In an embodiment, after the one or more links of the non-access point multi-link logical entity have switched to being associated with the first access point multi-link logical entity, the method further includes instructing by the UHR control module to send data received after switching of the one or more links and destined for the non-access point multi-link logical entity through the post-switch one or more links to the non-access point multi-link logical entity.

In an embodiment, after the one or more links of the non-access point multi-link logical entity have switched to being associated with the first access point multi-link logical entity, the method further includes instructing by the UHR control module to send a fifth frame to the non-access point multi-link logical entity, the fifth frame including fifth link identifier information, where the fifth link identifier information indicates one or more remaining links that are associated with the first access point multi-link logical entity and to which the non-access point multi-link logical entity is to switch.

In an embodiment, after the confirming by the UHR control module that the one or more links of the non-access point multi-link logical entity have switched to being associated with the first access point multi-link logical entity, the method further includes:
sharing or copying, by the UHR control module, the first key information for the UHR access point multi-link logical entity to the first access point multi-link logical entity, for use by associated links of the first access point multi-link logical entity.

In an embodiment, the first key information is based on an upper media access control (UMAC) address of the UHR control module.

In an embodiment, multicast key information for the one or more links of the first access point multi-link logical entity is based on a corresponding lower media access control (LMAC) address of the first access point multi-link logical entity.

In an embodiment, the multicast key information includes a fourth indication, and the fourth indication indicates link information corresponding to the multicast key information.

In an embodiment, the type of the multicast key information includes a group temporal key (GTK), an integrity group temporal key (IGTK), and a beacon integrity group temporal key (BIGTK).

In some embodiments of the present application, before the UHR control module receives the second frame from the non-access point multi-link logical entity, the method further includes sending, by the UHR control module, a ninth frame to the non-access point multi-link logical entity, where the ninth frame is configured to request the non-access point multi-link logical entity to send the second frame.

In an embodiment, the UHR control module is configured to store first key information for the UHR access point multi-link logical entity.

In an embodiment, before the UHR control module instructs to send the first frame to the non-access point multi-link logical entity, the method further includes instructing by the UHR control module to send a sixth frame to the non-access point multi-link logical entity, where the sixth frame includes a UHR mobility domain element, and the UHR mobility domain element indicates the seamless transition capability of the UHR access point multi-link logical entity.

In an embodiment, the method further includes determining first key information for the UHR access point multi-link logical entity based on the UMAC address of the UHR control module, where the first key information is stored in the UHR control module.

In an embodiment, the first key information includes unicast key information.

In an embodiment, the first key information includes pairwise transient key (PTK) key information.

In an embodiment, the method further includes: determining multicast key information for the one or more links of the first access point multi-link logical entity based on a corresponding lower media access control (LMAC) address of the first access point multi-link logical entity; and instructing by the UHR control module to send the multicast key information to the non-access point multi-link logical entity.

Embodiments of the present application provide a communication method in a wireless local area network, applied to a non-access point multi-link logical entity, the non-access point multi-link logical entity being associated with a non-co-located (Non-collocated) control module of an ultra high reliability (UHR) non-collocated access point multi-link logical entity. The method includes: sending, by the non-access point multi-link logical entity, a second frame to the UHR access point multi-link logical entity, the second frame including second link identifier information, where the second link identifier information indicates one or more links that are associated with a first access point multi-link logical entity and to which the non-access point multi-link logical entity is to switch.

In an embodiment, the second link identifier information includes logical entity identifier information corresponding to the first access point multi-link logical entity and link information corresponding to the one or more links.

In an embodiment, the one or more links are associated with the non-access point multi-link logical entity and the second access point link logical entity respectively.

Specifically, the one or more links may be one or more links for which the non-access point multi-link logical entity requests to disconnect association with the second access point link logical entity.

Alternatively, the one or more links may be one or more links for which the UHR control module requests to disconnect association with the non-access point multi-link logical entity.

In an embodiment, after the non-access point multi-link logical entity sends the second frame to the UHR access point multi-link logical entity, the method further includes: receiving, by the non-access point multi-link logical entity, a first frame from the UHR access point multi-link logical entity, the first frame including first link identifier information, where the second link identifier information corresponds to the first link identifier information.

In an embodiment, after the non-access point multi-link logical entity receives the first frame from the UHR access point multi-link logical entity, the method further includes: receiving, by the non-access point multi-link logical entity, a first frame from the UHR access point multi-link logical entity, the first frame including first link identifier information, where the second link identifier information corresponds to the first link identifier information.

In an embodiment, the fourth frame may include a fourth indication, the fourth indication indicating whether the non-access point multi-link logical entity has completed the operation requested by the first frame.

In an embodiment, after the non-access point multi-link logical entity receives the first frame sent from the first access point multi-link logical entity or the second access point multi-link logical entity of the UHR access point multi-link logical entity, the method further includes: disconnecting, by the non-access point multi-link logical entity, association with the second access point multi-link logical entity on the one or more links; and associating, by the non-access point multi-link logical entity, with the first access point multi-link logical entity on the one or more links, to complete switching of the one or more links.

In an embodiment, after the non-access point multi-link logical entity associates with the first access point multi-link logical entity on the one or more links, the method further includes: sending, by the non-access point multi-link logical entity, uplink data to the first access point multi-link logical entity preferentially through the one or more post-switch links.

In an embodiment, after the non-access point multi-link logical entity associates with the first access point multi-link logical entity on the one or more links, the method further includes: receiving, by the non-access point multi-link logical entity, buffered downlink data from the UHR access point multi-link logical entity through at least one associated link other than the one or more post-switch links, where the buffered downlink data is downlink data buffered for the one or more links before switching.

In an embodiment, the method further includes: sending, by the non-access point multi-link logical entity, a seventh frame on a plurality of links associated with the UHR access point multi-link logical entity respectively; receiving, by the non-access point multi-link logical entity, a plurality of eighth frames from the UHR access point multi-link logical entity in response to the seventh frame; and determining, by the non-access point multi-link logical entity, the one or more links of the first access point multi-link logical entity based on the plurality of eighth frames.

In an embodiment, the determining, by the non-access point multi-link logical entity, the one or more links of the first access point multi-link logical entity based on the plurality of eighth frames includes: determining, by the non-access point multi-link logical entity based on the plurality of eighth frames, quality of a plurality of signals of a plurality of links corresponding to the plurality of eighth frames respectively; and determining, by the non-access point multi-link logical entity, the one or more links of the first access point multi-link logical entity based on the quality of the plurality of signals.

In an embodiment, the method further includes receiving, by the non-access point multi-link logical entity, a multicast key signal from the UHR access point multi-link logical entity, where the multicast key information is based on a corresponding lower media access control (LMAC) address of the access point multi-link logical entity.

In an embodiment, the method further includes receiving, by the non-access point multi-link logical entity, a sixth frame from the UHR access point multi-link logical entity, where the sixth frame includes a UHR mobility domain element, and the UHR mobility domain element indicates the seamless transition capability of the UHR access point multi-link logical entity.

Exemplary embodiments of the present application provide a method for constructing a communication frame, the frame being applied to wireless network communication of an ultra high reliability (UHR) non-collocated access point multi-link logical entity. The method includes generating a first indication field, the first indication field indicating that a non-access point multi-link logical entity is to switch to one or more links associated with a first access point multi-link logical entity, where the first access point multi-link logical entity is affiliated with the UHR access point multi-link logical entity.

In an embodiment, the first indication field includes logical entity identifier information corresponding to the first access point multi-link logical entity and link information corresponding to the one or more links.

In an embodiment, the link information includes information about the number of links and information about one or more link identifiers.

In an embodiment, the first indication field further includes a STA control field.

In an embodiment, the STA control field includes a link deletion mode field and/or a link deletion count field.

In an embodiment, the method further includes generating an action field, where field content included in the first indication field depends on the value of the action field.

In an embodiment, the first indication further indicates a switching order of the one or more links.

Exemplary embodiments of the present application provide a method for constructing a communication frame, the frame being applied to wireless network communication of an ultra high reliability (UHR) non-collocated access point multi-link logical entity. The method includes generating a UHR mobility domain element field, where the UHR mobility element field includes a seamless transition capability field.

In an embodiment, the seamless transition capability field has a byte length greater than 2 bits.

In an embodiment, the UHR mobility domain element field further includes a mobility domain identifier field.

In an embodiment, the UHR mobility domain field is set in a sixth frame.

In an embodiment, the UHR mobility domain field reuses an FT capability and policy (FT Capability and Policy) subfield in a mobility domain information element (Mobility Domain Information element, MDIE) field. Embodiments of the present application provide an access point apparatus, including a sending module configured to send a first frame to a non-access point multi-link logical entity (Non-AP Multi-link logical entity), where the first frame includes first link identifier information, and the first link identifier information indicates one or more links that are associated with a first access point multi-link logical entity and to which the non-access point multi-link logical entity is to switch.

FIG. 25 is a structural schematic diagram of an access point apparatus 400 according to embodiments of the present application. The access point apparatus 400 may be the access point multi-link device 202 in the WLAN shown in FIG. 1. As shown in FIG. 25, the access point apparatus 400 includes:
a receiving module 410 configured to receive a second frame from a non-access point multi-link logical entity, where the second frame is configured to initiate a roaming request; and
a sending module 420 configured to send a first frame to the non-access point multi-link logical entity, where the first frame is configured to indicate roaming reconfiguration;
where the access point apparatus 400 includes a first access point multi-link logical entity and a second access point multi-link logical entity, and the second access point multi-link logical entity is associated with the non-access point multi-link logical entity.

In some embodiments, the first frame includes first link identifier information, and the first link identifier information is configured to indicate a target link of the first access point multi-link logical entity to which the non-access point multi-link logical entity is to switch.

In some embodiments, the second frame includes second link identifier information, and the second link identifier information is configured to indicate a link of an access point multi-link logical entity to which the non-access point multi-link logical entity requests to switch.

Optionally, the access point apparatus 400 may be an access point multi-link logical entity, such as a UHR access point multi-link logical entity.

In some embodiments, the sending module 420 is further configured to:
send a first frame to the non-access point multi-link logical entity through the first access point multi-link logical entity or the second access point multi-link logical entity.

In some embodiments, the receiving module 410 is further configured to:
receive a second frame from the non-access point multi-link logical entity through the first access point multi-link logical entity or the second access point multi-link logical entity.

In some embodiments, the first link identifier information includes identifier information of the first access point multi-link logical entity and link information of the target link.

In some embodiments, the first frame includes a common information field, and the first link identifier information is carried in the common information field.

In some embodiments, the first frame further includes a first indication, and the first indication is configured to indicate a switching manner of the target link.

In some embodiments, the first indication is configured to indicate immediate switching, or the first indication is configured to indicate delayed switching, and the first indication is further configured to indicate a delay duration of the delayed switching.

In some embodiments, before receiving a second frame from the non-access point multi-link logical entity, the sending module 420 is further configured to:
send a third frame to the non-access point multi-link logical entity, where the third frame includes third link identifier information, and the third link identifier information is configured to instruct a candidate access point multi-link logical entity and/or a candidate link to which the non-access point multi-link logical entity is recommended to switch by the access point apparatus 400.

In some embodiments, the third frame includes a candidate list field, where the candidate list field includes at least one subelement, each subelement corresponds to one candidate access point multi-link logical entity, and each subelement is configured to indicate one or more candidate links of the corresponding candidate access point multi-link logical entity.

In some embodiments, the subelement includes at least one of the following fields:
a first field, configured to indicate address information of the candidate access point multi-link logical entity;
a second field, configured to indicate whether it is recommended that the non-access point multi-link logical entity switch to all candidate links of the candidate access point multi-link logical entity; or
a third field, configured to indicate one or more candidate links of the candidate access point multi-link logical entity to which switching is recommended.

In some embodiments, the candidate access point multi-link logical entity and/or the candidate link is determined by the UHR access point multi-link logical entity based on load status and/or signal quality of links of a neighbor access point multi-link logical entity of the second access point multi-link logical entity.

In some embodiments, the access point apparatus 400 further includes:
a processing module configured to determine that the target link of the non-access point multi-link logical entity has switched to being associated with the first access point multi-link logical entity when a preset condition is satisfied;
where the preset condition includes at least one of the following:
   receiving a fourth frame from the non-access point multi-link logical entity, the fourth frame including fourth link identifier information corresponding to the first link identifier information in the first frame; or
   a preset time having elapsed since the first frame is sent.

In some embodiments, after the target link of the non-access point multi-link logical entity has switched to being associated with the first access point multi-link logical entity, the sending module 420 is further configured to:
send a fifth frame to the non-access point multi-link logical entity, the fifth frame including fifth link identifier information;
where the fifth link identifier information is configured to indicate switching one or more remaining links of the non-access point multi-link logical entity to being associated with the first access point multi-link logical entity, the one or more remaining links including one or more links, other than the target link, among links associated between the non-access point multi-link logical entity and the second access point multi-link logical entity.

In some embodiments, after the target link of the non-access point multi-link logical entity has switched to being associated with the first access point multi-link logical entity, the sending module 420 is further configured to:
send buffered downlink data to the non-access point multi-link logical entity, where the buffered downlink data is downlink data buffered on the target link before switching.

In some embodiments, the sending module 420 is further configured to:
send the buffered downlink data to the non-access point multi-link logical entity through the second access point multi-link logical entity.

In some embodiments, the sending module 420 is further configured to:
send the buffered downlink data to the first access point multi-link logical entity through the second access point multi-link logical entity; and
send the buffered downlink data to the non-access point multi-link logical entity through the first access point multi-link logical entity.

In some embodiments, the access point apparatus 400 further includes:
a processing module configured to determine unicast key information of the access point apparatus 400 based on an upper media access control UMAC address of the access point apparatus 400.

The processing module is further configured to share, copy, or send the unicast key information of the access point apparatus 400 to the first access point multi-link logical entity.

The sending module 420 is further configured to send the unicast key information of the access point apparatus 400 to the non-access point multi-link logical entity.

In some embodiments, the access point apparatus 400 further includes:
a processing module configured to determine multicast key information of one or more links of the first access point multi-link logical entity respectively based on one or more lower media access control LMAC addresses of the first access point multi-link logical entity.

In some embodiments, the sending module 420 is further configured to send multicast key information of one or more links of the first access point multi-link logical entity to the non-access point multi-link logical entity.

In some embodiments, before sending a first frame to the non-access point multi-link logical entity, the sending module 420 is further configured to:
send a sixth frame to the non-access point multi-link logical entity, the sixth frame being configured to indicate that the UHR access point multi-link logical entity has seamless transition capability.

In some embodiments, the sixth frame includes an ultra high reliability UHR mobility domain element, the UHR mobility domain element being configured to indicate that the UHR access point multi-link logical entity has the seamless transition capability.

In some embodiments, the receiving module 410 is further configured to receive a seventh frame sent by the non-access point multi-link logical entity through a plurality of access point multi-link logical entities; and
the sending module 420 is further configured to send an eighth frame in response to the seventh frame through the plurality of access point multi-link logical entities to the non-access point multi-link logical entity, the eighth frame being configured to determine the first access point multi-link logical entity.

The access point apparatus 400 may further include other modules configured to execute the communication method in the above embodiments. The above exemplary embodiments of the communication method, as well as improvements, modifications, and variations derived therefrom by those skilled in the art based on these embodiments without creative effort, may also be configured to define the access point apparatus 400, and details are not repeated in the present application.

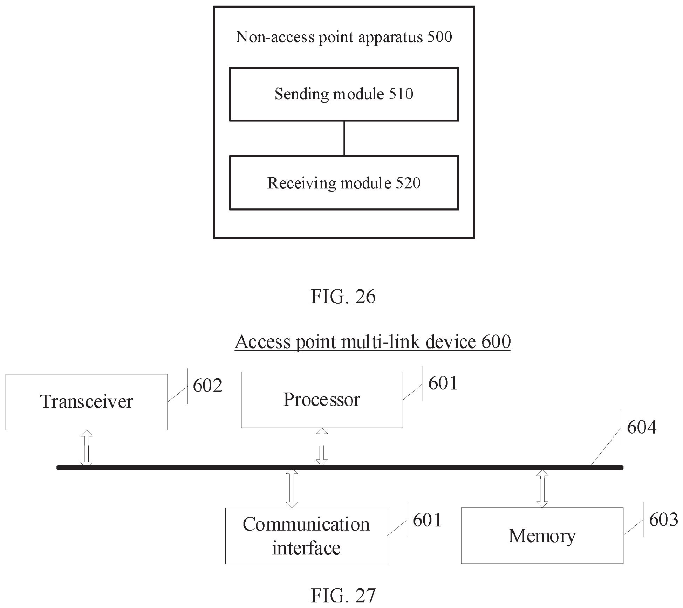

FIG. 26 is a schematic structural diagram of a non-access point apparatus 500 according to embodiments of the present application. The non-access point apparatus 500 may be the terminal device 201 in the WLAN shown in FIG. 1. As shown in FIG. 26, the non-access point apparatus 500 includes:
a sending module 510 configured to send a second frame to an ultra high reliability UHR access point multi-link logical entity, where the second frame is configured to initiate a roaming request; and
a receiving module 520 configured to receive a first frame from the UHR access point multi-link logical entity, where the first frame is configured to indicate roaming reconfiguration;
where the UHR access point multi-link logical entity includes a first access point multi-link logical entity and a second access point multi-link logical entity, and the second access point multi-link logical entity is associated with the non-access point apparatus 500.

In some embodiments, the first frame includes first link identifier information, and the first link identifier information is configured to indicate a target link of the first access point multi-link logical entity to which the non-access point apparatus 500 is to switch.

In some embodiments, the second frame includes second link identifier information, and the second link identifier information is configured to indicate a link of an access point multi-link logical entity to which the non-access point apparatus 500 requests to switch.

Optionally, the non-access point apparatus 500 may be a non-access point multi-link logical entity.

In some embodiments, the receiving module 520 is further configured to:
receive the first frame sent from the first access point multi-link logical entity or the second access point multi-link logical entity of the UHR access point multi-link logical entity.

In some embodiments, the first link identifier information includes identifier information of the first access point multi-link logical entity and link information of the target link.

In some embodiments, the first frame includes a common information field, and the first link identifier information is carried in the common information field.

In some embodiments, the first frame further includes a first indication, and the first indication is configured to indicate a switching manner of the target link.

In some embodiments, the first indication is configured to indicate immediate switching, or the first indication is configured to indicate delayed switching, and the first indication is further configured to indicate a delay duration of the delayed switching.

In some embodiments, the access point multi-link logical entity and link indicated by the second link identifier information are determined by the non-access point apparatus 500 based on signal quality of downlink signals of at least one access point multi-link logical entity affiliated with the UHR access point multi-link logical entity.

In some embodiments, before sending a second frame to the UHR access point multi-link logical entity, the method further includes:
the receiving module 520 is further configured to receive a third frame from the UHR access point multi-link logical entity, where the third frame includes third link identifier information, and the third link identifier information is configured to indicate a candidate access point multi-link logical entity and/or a candidate link to which the non-access point apparatus 500 is recommended to switch by the UHR access point multi-link logical entity.

In some embodiments, the third frame includes a candidate list field, where the candidate list field includes at least one subelement, each subelement corresponds to one candidate access point multi-link logical entity, and each subelement is configured to indicate one or more candidate links of the corresponding candidate access point multi-link logical entity.

In some embodiments, the subelement includes at least one of the following fields:
a first field, configured to indicate address information of the candidate access point multi-link logical entity;
a second field, configured to indicate whether it is recommended that the non-access point apparatus 500 switch to all candidate links of the candidate access point multi-link logical entity; or
a third field, configured to indicate one or more candidate links of the candidate access point multi-link logical entity to which switching is recommended.

In some embodiments, the access point multi-link logical entity and link indicated by the second link identifier information in the second frame are determined by the non-access point apparatus 500 based on link quality of candidate links of a candidate access point multi-link logical entity indicated by the third link identifier information.

In some embodiments, after the target link of the non-access point apparatus 500 has switched to being associated with the first access point multi-link logical entity, the receiving module 520 is further configured to:
receive a fifth frame from the UHR access point multi-link logical entity, the fifth frame including fifth link identifier information;
where the fifth link identifier information is configured to indicate switching one or more remaining links of the non-access point multi-link logical entity to being associated with the first access point multi-link logical entity, the one or more remaining links including one or more links, other than the target link, among links associated between the non-access point apparatus 500 and the second access point multi-link logical entity.

In some embodiments, after the target link of the non-access point apparatus 500 has switched to being associated with the first access point multi-link logical entity, the receiving module 520 is further configured to:
receive buffered downlink data from the UHR access point multi-link logical entity, where the buffered downlink data is downlink data buffered on the target link before switching.

In some embodiments, the receiving module 520 is further configured to receive the buffered downlink data sent by the UHR access point multi-link logical entity through the second access point multi-link logical entity.

In some embodiments, the receiving module 520 is further configured to receive the buffered downlink data sent by the UHR access point multi-link logical entity through the first access point multi-link logical entity, where the buffered downlink data is forwarded by the second access point multi-link logical entity to the first access point multi-link logical entity.

In some embodiments, the receiving module 520 is further configured to receive unicast key information of the UHR access point multi-link logical entity from the UHR access point multi-link logical entity, where the unicast key information is determined based on an upper media access control UMAC address of the UHR access point multi-link logical entity.

In some embodiments, the receiving module 520 is further configured to receive multicast key information of one or more links of the first access point multi-link logical entity from the UHR access point multi-link logical entity, where the multicast key information of the one or more links is determined based on one or more lower media access control LMAC addresses of the first access point multi-link logical entity.

In some embodiments, the receiving module 520 is further configured to receive a sixth frame from the UHR access point multi-link logical entity, the sixth frame being configured to indicate that the UHR access point multi-link logical entity has seamless transition capability.

In some embodiments, the sixth frame includes an ultra high reliability UHR mobility domain element, the UHR mobility domain element being configured to indicate that the UHR access point multi-link logical entity has the seamless transition capability.

In some embodiments, the sending module 510 is further configured to send a seventh frame to a plurality of access point multi-link logical entities of the UHR access point multi-link logical entity; and
the receiving module 520 is further configured to receive an eighth frame sent by the plurality of access point multi-link logical entities of the UHR access point multi-link logical entity, the eighth frame being configured to determine the first access point multi-link logical entity.

The non-access point apparatus 500 may further include other modules configured to execute the communication method in the above embodiments. The above exemplary embodiments of the communication method, as well as improvements, modifications, and variations derived therefrom by those skilled in the art based on these embodiments without creative effort, may also be configured to define the non-access point apparatus 500, and details are not repeated in the present application.

Embodiments of the present application provide an access point multi-link device, including a processor and a transceiver.

The processor is configured to call a computer program, and cooperate with the transceiver to implement actions executed by the access point multi-link device in the above method embodiments.

By way of example, FIG. 27 is a block diagram of an access point multi-link device according to embodiments of the present application. As shown in FIG. 27, the access point multi-link device 600 includes a processor 601 and a transceiver 602. The transceiver 602 is configured to execute sending and receiving actions of the access point multi-link device in the above method embodiments under the control of the processor 601.

Optionally, the access point multi-link device 600 further includes a memory 603, a communication bus 604, and a communication interface 605.

The processor 601 may be a general-purpose central processing unit (central processing unit, CPU), an application-specific integrated circuit (application-specific integrated circuit, ASIC), or one or more integrated circuits configured to control program execution of the solutions in the present application.

The communication bus 604 may include a path for transmitting information between the above components.

The memory 603 may be a read-only memory (read-only memory, ROM) or another type of static storage device capable of storing static information and instruction, a random access memory (random access memory, RAM) or another type of dynamic storage device capable of storing information and instructions, an electrically erasable programmable read-only memory (electrically erasable programmable read-only memory, EEPROM), a compact disc read-only memory (compactdisc read-only Memory, CD-ROM) or another compact disc storage, an optical disc storage (including a compressed optical disc, a laser disc, an optical disc, a digital versatile disc, a blue-ray optical disc, and the like), a magnetic disk storage medium or another magnetic storage device, or any other medium capable of carrying or storing expected program code in a form of an instruction or a data structure and capable of being stored and accessed by a computer. This is not limited thereto. The memory 603 may exist independently, and is connected to the processor 601 by using the communication bus 604. The memory 603 may alternatively be integrated with the processor 601.

The memory 603 is configured to store program code configured to execute the solution of the present application, and the processor 601 controls execution. The processor 601 is configured to execute the program code stored in the memory 603. The program code may include one or more software modules. The one or more software modules may be software modules provided in the embodiment of FIG. 17. The communication interface 605 uses the transceiver 602 for communicating with other devices or communication networks, such as Ethernet, radio access network (radio access network, RAN), and WLAN.

In a specific implementation, in one embodiment, the access point multi-link device may include a plurality of processors. Each of these processors may be a single-core (single-CPU) processor or a multi-core (multi-CPU) processor. The processor here may refer to one or more devices, circuits, and/or processing cores for processing data (such as a computer program instruction).

In a specific implementation, the access point multi-link device may be a router, a switch, or the like.

Optionally, the access point multi-link device is an access point multi-link device. A plurality of APs included in the access point multi-link device are independent of each other at the LMAC layer and PHY layer, and also independent of each other at the UMAC layer. Alternatively, a plurality of STAs included in the access point multi-link device are independent of each other at the low MAC layer and PHY layer, and share the UMAC layer. Embodiments of the present application do not limit the internal structure of the access point multi-link device. By way of example, the UMAC layer or LMAC layer may be implemented by one processor in a chip system of the access point multi-link device, or may be implemented by different processors in the chip system respectively.

Embodiments of the present application provide a non-access point multi-link device, including a processor and a transceiver.

The processor is configured to call a computer program, and cooperate with the transceiver to implement actions executed by the non-access point multi-link device in the above method embodiments.

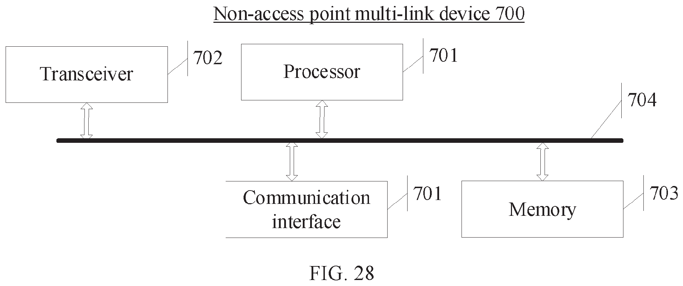

By way of example, FIG. 28 is a block diagram of a non-access point multi-link device according to embodiments of the present application. As shown in FIG. 28, the non-access point multi-link device 700 includes a processor 701 and a transceiver 702. The transceiver 702 is configured to execute sending and receiving actions executed by the non-access point multi-link device in the above method embodiments under the control of the processor 701.

Optionally, the non-access point multi-link device 700 further includes a memory 703, a communication bus 704, and a communication interface 705.

The processor 701 may be a general-purpose CPU, an ASIC, or one or more integrated circuits configured to control program execution of the solutions in the present application.

The communication bus 704 may include a path for transmitting information between the above components.

The memory 703 may be a ROM or another type of static storage device capable of storing static information and instruction, a RAM or another type of dynamic storage device capable of storing information and instructions, an EEPROM, a CD-ROM or another compact disc storage, an optical disc storage (including a compressed optical disc, a laser disc, an optical disc, a digital versatile disc, a blue-ray optical disc, and the like), a magnetic disk storage medium or another magnetic storage device, or any other medium capable of carrying or storing expected program code in a form of an instruction or a data structure and capable of being stored and accessed by a computer. This is not limited thereto. The memory 703 may exist independently, and is connected to the processor 701 by using the communication bus 704. The memory 703 may alternatively be integrated with the processor 701.

The memory 703 is configured to store program code configured to execute the solution of the present application, and the processor 701 controls execution. The processor 701 is configured to execute the program code stored in the memory 703. The program code may include one or more software modules. The one or more software modules may be software modules provided in FIG. 28.

The communication interface 705 uses the transceiver 702 for communicating with other devices or communication networks, such as Ethernet, RAN, and WLAN.

In a specific implementation, in one embodiment, the non-access point multi-link device may include a plurality of processors. Each of these processors may be a single-core (single-CPU) processor or a multi-core (multi-CPU) processor. The processor here may refer to one or more devices, circuits, and/or processing cores for processing data (such as a computer program instruction).

In a specific implementation, the non-access point multi-link device may be a wireless terminal such as a mobile phone, a computer, or a smart wearable device.

Optionally, the non-access point multi-link device is a non-access point multi-link device. A plurality of non-AP STAs included in the non-access point multi-link device are independent of each other at the LMAC layer and PHY layer, and also independent of each other at the UMAC layer. Alternatively, a plurality of non-AP STAs included in the non-access point multi-link device are independent of each other at the LMAC layer and PHY layer, and share the UMAC layer. Embodiments of the present application do not limit the internal structure of the non-access point multi-link device. By way of example, the upper MAC layer or lower MAC layer may be implemented by one processor in a chip system of the non-access point multi-link device, or may be implemented by different processors in the chip system respectively.

It should be noted herein that the electronic device provided in the embodiments of the present application can implement all method steps implemented in the above method embodiments, with the same technical effects achieved, and parts and beneficial effects in this embodiment that are same as those in the method embodiments are not specifically described here.

Embodiments of the present application further provide a computer-readable storage medium. The computer-readable storage medium stores computer-executable instructions. The computer-executable instructions are configured to enable a computer to execute the terminal roaming guidance method in the above embodiments.

Embodiments of the present application further provide a computer program product. When the computer program product is called by a computer, the computer is enabled to execute the terminal roaming guidance method in the above embodiments.

Those skilled in the art should understand that the embodiments of the present application can be provided as a method, a system, or a computer program product. Therefore, the present application can take the form of an entirely hardware embodiment, an entirely software embodiment, or an embodiment combining software and hardware aspects. Moreover, the present application can take the form of a computer program product implemented on one or more computer-usable storage media (including but not limited to disk storage, CD-ROM, optical storage, and the like) containing computer-usable program code.

The present application is described with reference to the flowcharts and/or the block diagrams of the method, the device (system), and the computer program product according to the present application. It should be understood that computer program instructions may be configured to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

Alternatively, these computer program instructions may be loaded onto a computer or another programmable data processing device, so that a series of operations and steps are performed on the computer or the other programmable device, to generate computer-implemented processing. Therefore, the instructions executed on the computer or the other programmable device provide steps for implementing a specific function in one or more procedures in the flowcharts and/or in one or more blocks in the block diagrams.

## Claims

1. A communication method in a wireless local area network, comprising:
receiving, by an ultra high reliability UHR access point multi-link logical entity, a second frame from a non-access point multi-link logical entity, wherein the second frame is configured to initiate a roaming request; and
sending, by the UHR access point multi-link logical entity, a first frame to the non-access point multi-link logical entity, wherein the first frame is configured to indicate roaming reconfiguration;
wherein the UHR access point multi-link logical entity comprises a first access point multi-link logical entity and a second access point multi-link logical entity, and the second access point multi-link logical entity is associated with the non-access point multi-link logical entity.

2. The method according to claim 1, wherein the sending, by the UHR access point multi-link logical entity, a first frame to the non-access point multi-link logical entity comprises:
sending, by the UHR access point multi-link logical entity, the first frame to the non-access point multi-link logical entity through the first access point multi-link logical entity or the second access point multi-link logical entity.

3. The method according to claim 1 or 2, wherein the first frame comprises first link identifier information, and the first link identifier information is configured to indicate a target link of the first access point multi-link logical entity to which the non-access point multi-link logical entity is to switch; and/or
the second frame comprises second link identifier information, and the second link identifier information is configured to indicate a link of an access point multi-link logical entity to which the non-access point multi-link logical entity requests to switch.

4. The method according to claim 3, wherein the first link identifier information comprises identifier information of the first access point multi-link logical entity and link information of the target link.

5. The method according to claim 3 or 4, wherein the first frame further comprises a first indication, and the first indication is configured to indicate a switching manner of the target link.

6. The method according to claim 5, wherein the first indication is configured to indicate immediate switching, or the first indication is configured to indicate delayed switching, and the first indication is further configured to indicate a delay duration of the delayed switching.

7. The method according to any one of claims 1 to 6, wherein the receiving, by an ultra high reliability UHR access point multi-link logical entity, a second frame from a non-access point multi-link logical entity comprises: receiving, by the UHR access point multi-link logical entity, the second frame through the first access point multi-link logical entity or the second access point multi-link logical entity.

8. The method according to any one of claims 1 to 7, wherein before the receiving, by an ultra high reliability UHR access point multi-link logical entity, a second frame from a non-access point multi-link logical entity, the method further comprises:
sending, by the UHR access point multi-link logical entity, a third frame to the non-access point multi-link logical entity, wherein the third frame comprises third link identifier information, and the third link identifier information is configured to indicate a candidate access point multi-link logical entity and/or a candidate link to which the non-access point multi-link logical entity is recommended to switch by the UHR access point multi-link logical entity.

9. The method according to claim 8, wherein the third frame comprises a candidate list field, wherein the candidate list field comprises at least one subelement, the at least one subelement corresponds to at least one candidate access point multi-link logical entity, and the at least one subelement is configured to indicate one or more candidate links of the at least one candidate access point multi-link logical entity.

10. The method according to claim 9, wherein the subelement comprises at least one of the following fields:
a first field, configured to indicate address information of the candidate access point multi-link logical entity;
a second field, configured to indicate whether it is recommended that the non-access point multi-link logical entity switch to all candidate links of the candidate access point multi-link logical entity; or
a third field, configured to indicate one or more candidate links of the candidate access point multi-link logical entity to which switching is recommended.

11. The method according to any one of claims 8 to 10, wherein the candidate access point multi-link logical entity and/or the candidate link is determined by the UHR access point multi-link logical entity based on a load status and/or signal quality of a link of a neighbor access point multi-link logical entity of the second access point multi-link logical entity.

12. The method according to any one of claims 1 to 11, wherein the method further comprises:
determining, by the UHR access point multi-link logical entity when a preset condition is satisfied, that the target link of the non-access point multi-link logical entity has switched to being associated with the first access point multi-link logical entity; wherein the preset condition comprises at least one of the following:
the UHR access point multi-link logical entity has received a fourth frame from the non-access point multi-link logical entity, the fourth frame comprising fourth link identifier information corresponding to first link identifier information in the first frame; or
a preset time has elapsed since the UHR access point multi-link logical entity sent the first frame.

13. The method according to any one of claims 1 to 12, wherein after the target link of the non-access point multi-link logical entity has switched to being associated with the first access point multi-link logical entity, the method further comprises: sending, by the UHR access point multi-link logical entity, a fifth frame to the non-access point multi-link logical entity, the fifth frame comprising fifth link identifier information;
wherein the fifth link identifier information is configured to indicate switching one or more remaining links of the non-access point multi-link logical entity to being associated with the first access point multi-link logical entity, the one or more remaining links comprising one or more links, other than the target link, among links associated between the non-access point multi-link logical entity and the second access point multi-link logical entity.

14. The method according to any one of claims 1 to 13, wherein after the target link of the non-access point multi-link logical entity has switched to being associated with the first access point multi-link logical entity, the method further comprises:
sending, by the UHR access point multi-link logical entity, buffered downlink data to the non-access point multi-link logical entity, wherein the buffered downlink data is downlink data buffered on the target link before switching.

15. The method according to claim 14, wherein the sending, by the UHR access point multi-link logical entity, buffered downlink data to the non-access point multi-link logical entity comprises:
sending, by the UHR access point multi-link logical entity, the buffered downlink data to the non-access point multi-link logical entity through the second access point multi-link logical entity.

16. The method according to claim 14 or 15, wherein the sending, by the UHR access point multi-link logical entity, buffered downlink data to the non-access point multi-link logical entity comprises:
sending, by the second access point multi-link logical entity, the buffered downlink data to the first access point multi-link logical entity; and
sending, by the first access point multi-link logical entity, the buffered downlink data to the non-access point multi-link logical entity.

17. The method according to any one of claims 1 to 16, wherein the method further comprises:
determining, by the UHR access point multi-link logical entity, unicast key information of the UHR access point multi-link logical entity based on an upper media access control UMAC address of the UHR access point multi-link logical entity.

18. The method according to claim 17, wherein the method further comprises at least one of the following:
sharing, copying, or sending, by the UHR access point multi-link logical entity, the unicast key information of the UHR access point multi-link logical entity to the first access point multi-link logical entity; or
sending, by the UHR access point multi-link logical entity, the unicast key information of the UHR access point multi-link logical entity to the non-access point multi-link logical entity.

19. The method according to any one of claims 1 to 18, wherein the method further comprises:
determining, by the UHR access point multi-link logical entity, multicast key information of one or more links of the first access point multi-link logical entity respectively based on one or more lower media access control LMAC addresses of the first access point multi-link logical entity.

20. The method according to claim 19, wherein the method further comprises:
sending, by the UHR access point multi-link logical entity, the multicast key information of one or more links of the first access point multi-link logical entity to the non-access point multi-link logical entity.

21. The method according to any one of claims 1 to 20, wherein before the sending, by the UHR access point multi-link logical entity, a first frame to the non-access point multi-link logical entity, the method further comprises:
sending, by the UHR access point multi-link logical entity, a sixth frame to the non-access point multi-link logical entity, the sixth frame being configured to indicate that the UHR access point multi-link logical entity has seamless transition capability.

22. The method according to claim 21, wherein the sixth frame comprises an ultra high reliability UHR mobility domain element, the UHR mobility domain element being configured to indicate that the UHR access point multi-link logical entity has the seamless transition capability.

23. The method according to any one of claims 1 to 22, wherein the method further comprises:
receiving, by a plurality of access point multi-link logical entities of the UHR access point multi-link logical entity, a seventh frame sent by the non-access point multi-link logical entity; and
sending, by the plurality of access point multi-link logical entities of the UHR access point multi-link logical entity to the non-access point multi-link logical entity, an eighth frame in response to the seventh frame, the eighth frame being configured to determine the first access point multi-link logical entity.

24. A communication method in a wireless local area network, comprising:
sending, by a non-access point multi-link logical entity, a second frame to an ultra high reliability UHR access point multi-link logical entity, wherein the second frame is configured to initiate a roaming request; and
receiving, by the non-access point multi-link logical entity, a first frame from the UHR access point multi-link logical entity, wherein the first frame is configured to indicate roaming reconfiguration;
wherein the UHR access point multi-link logical entity comprises a first access point multi-link logical entity and a second access point multi-link logical entity, and the second access point multi-link logical entity is associated with the non-access point multi-link logical entity.

25. The method according to claim 24, wherein the receiving, by the non-access point multi-link logical entity, a first frame from the UHR access point multi-link logical entity comprises:
receiving, by the non-access point multi-link logical entity, the first frame sent from the first access point multi-link logical entity or the second access point multi-link logical entity of the UHR access point multi-link logical entity.

26. The method according to claim 24 or 25, wherein the first frame comprises first link identifier information, and the first link identifier information is configured to indicate a target link of the first access point multi-link logical entity to which the non-access point multi-link logical entity is to switch; and/or
the second frame comprises second link identifier information, and the second link identifier information is configured to indicate a link of an access point multi-link logical entity to which the non-access point multi-link logical entity requests to switch.

27. The method according to claim 26, wherein the first link identifier information comprises identifier information of the first access point multi-link logical entity and link information of the target link.

28. The method according to claim 26 or 27, wherein the first frame further comprises a first indication, and the first indication is configured to indicate a switching manner of the target link.

29. The method according to claim 28, wherein the first indication is configured to indicate immediate switching, or the first indication is configured to indicate delayed switching, and the first indication is further configured to indicate a delay duration of the delayed switching.

30. The method according to any one of claims 24 to 29, wherein the sending, by a non-access point multi-link logical entity, a second frame to an ultra high reliability UHR access point multi-link logical entity comprises:
sending, by the non-access point multi-link logical entity, the second frame to the first access point multi-link logical entity or the second access point multi-link logical entity of the UHR access point multi-link logical entity.

31. The method according to claim 26, wherein the access point multi-link logical entity and link indicated by the second link identifier information are determined by the non-access point multi-link logical entity based on signal quality of downlink signals of at least one access point multi-link logical entity affiliated with the UHR access point multi-link logical entity.

32. The method according to any one of claims 24 to 31, wherein before the sending, by a non-access point multi-link logical entity, a second frame to an ultra high reliability UHR access point multi-link logical entity, the method further comprises:
receiving, by the non-access point multi-link logical entity, a third frame from the UHR access point multi-link logical entity, wherein the third frame comprises third link identifier information, and the third link identifier information is configured to indicate a candidate access point multi-link logical entity and/or a candidate link to which the non-access point multi-link logical entity is recommended to switch by the UHR access point multi-link logical entity.

33. The method according to claim 32, wherein the third frame comprises a candidate list field, wherein the candidate list field comprises at least one subelement, the at least one subelement corresponds to at least one candidate access point multi-link logical entity, and the at least one subelement is configured to indicate one or more candidate links of the at least one candidate access point multi-link logical entity.

34. The method according to claim 32 or 33, wherein the access point multi-link logical entity and link indicated by the second link identifier information in the second frame are determined by the non-access point multi-link logical entity based on link quality of candidate links of a candidate access point multi-link logical entity indicated by the third link identifier information.

35. The method according to any one of claims 24 to 34, wherein after the target link of the non-access point multi-link logical entity has switched to being associated with the first access point multi-link logical entity, the method further comprises:
receiving, by the non-access point multi-link logical entity, a fifth frame from the UHR access point multi-link logical entity, the fifth frame comprising fifth link identifier information;
wherein the fifth link identifier information is configured to indicate switching one or more remaining links of the non-access point multi-link logical entity to being associated with the first access point multi-link logical entity, the one or more remaining links comprising one or more links, other than the target link, among links associated between the non-access point multi-link logical entity and the second access point multi-link logical entity.

36. The method according to any one of claims 24 to 35, wherein after the target link of the non-access point multi-link logical entity has switched to being associated with the first access point multi-link logical entity, the method further comprises:
receiving, by the non-access point multi-link logical entity, buffered downlink data from the UHR access point multi-link logical entity, wherein the buffered downlink data is downlink data buffered on the target link before switching.

37. The method according to claim 36, wherein the receiving, by the non-access point multi-link logical entity, buffered downlink data from the UHR access point multi-link logical entity comprises:
receiving, by the non-access point multi-link logical entity, the buffered downlink data sent by the UHR access point multi-link logical entity through the second access point multi-link logical entity.

38. The method according to claim 36 or 37, wherein the receiving, by the non-access point multi-link logical entity, buffered downlink data from the UHR access point multi-link logical entity comprises: receiving, by the non-access point multi-link logical entity, the buffered downlink data sent by the UHR access point multi-link logical entity through the first access point multi-link logical entity, wherein the buffered downlink data is forwarded by the second access point multi-link logical entity to the first access point multi-link logical entity.

39. The method according to any one of claims 24 to 38, wherein the method further comprises:
receiving, by the non-access point multi-link logical entity, unicast key information of the UHR access point multi-link logical entity from the UHR access point multi-link logical entity, wherein the unicast key information is determined based on an upper media access control UMAC address of the UHR access point multi-link logical entity.

40. The method according to any one of claims 24 to 39, wherein the method further comprises:
receiving, by the non-access point multi-link logical entity, multicast key information of one or more links of the first access point multi-link logical entity from the UHR access point multi-link logical entity, wherein the multicast key information of the one or more links is determined respectively based on one or more lower media access control LMAC addresses of the first access point multi-link logical entity.

41. The method according to any one of claims 24 to 40, wherein before the receiving, by the non-access point multi-link logical entity, a first frame from the UHR access point multi-link logical entity, the method further comprises:
receiving, by the non-access point multi-link logical entity, a sixth frame from the UHR access point multi-link logical entity, the sixth frame being configured to indicate that the UHR access point multi-link logical entity has seamless transition capability.

42. The method according to claim 41, wherein the sixth frame comprises an ultra high reliability UHR mobility domain element, the UHR mobility domain element being configured to indicate that the UHR access point multi-link logical entity has the seamless transition capability.

43. The method according to any one of claims 24 to 42, wherein the method further comprises:
sending, by the non-access point multi-link logical entity, a seventh frame to a plurality of access point multi-link logical entities of the UHR access point multi-link logical entity; and
receiving, by the non-access point multi-link logical entity, an eighth frame sent by the plurality of access point multi-link logical entities of the UHR access point multi-link logical entity, the eighth frame being configured to determine the first access point multi-link logical entity.

44. An access point apparatus, comprising:
a receiving module configured to receive a second frame from a non-access point multi-link logical entity, wherein the second frame is configured to initiate a roaming request; and
a sending module configured to send a first frame to the non-access point multi-link logical entity, wherein the first frame is configured to indicate roaming reconfiguration;
wherein the access point apparatus comprises a first access point multi-link logical entity and a second access point multi-link logical entity, and the second access point multi-link logical entity is associated with the non-access point multi-link logical entity.

45. A non-access point apparatus, comprising:
a sending module configured to send a second frame to an ultra high reliability UHR access point multi-link logical entity, wherein the second frame is configured to initiate a roaming request; and
a receiving module configured to receive a first frame from the UHR access point multi-link logical entity, wherein the first frame is configured to indicate roaming reconfiguration;
wherein the UHR access point multi-link logical entity comprises a first access point multi-link logical entity and a second access point multi-link logical entity, and the second access point multi-link logical entity is associated with the non-access point apparatus.

46. An access point multi-link device, comprising a processor and a memory, wherein the memory is configured to store a computer program, and the processor is configured to call and run the computer program stored in the memory to execute the method according to any one of claims 1 to 23.

47. A non-access point multi-link device, comprising a processor and a memory, wherein the memory is configured to store a computer program, and the processor is configured to call and run the computer program stored in the memory to execute the method according to any one of claims 24 to 43.

48. A chip, comprising a processor configured to call and run a computer program from a memory, causing a device equipped with the chip to execute the method according to any one of claims 1 to 23 or the method according to any one of claims 24 to 43.

49. A computer-readable storage medium, configured to store a computer program, wherein the computer program enables a computer to execute the method according to any one of claims 1 to 23 or the method according to any one of claims 24 to 43.
